# EUROPEAN PATENT SPECIFICATION

(11) **EP 1 908 688 B1**
(45) Date of publication and mention of the grant of the patent: **25.09.2013**
(21) Application number: 06732180.2
(22) Date of filing: 14.04.2006
(51) Int. Cl.: B65B 31/00, B65B 55/02, B67C 3/22, B67C 7/00

(54) **PROCESS AND APPARATUS FOR PRODUCING BEVERAGE FILLED INTO CONTAINER**
VERFAHREN UND VORRICHTUNG ZUR HERSTELLUNG VON IN BEHÄLTER ABGEFÜLLTEN GETRÄNKEN
PROCÉDÉ ET APPAREIL POUR PRODUIRE DES BOISSONS REMPLIES DANS UN CONTENEUR

(30) Priority: 07.07.2005 JP 2005198822; 14.07.2005 JP 2005205615
(43) Date of publication of application: 09.04.2008
(73) Proprietor: Toyo Seikan Kaisha, Ltd., Shinagawa-ku Tokyo 141-8640 (JP)
(72) Inventor: IWASHITA, Takeshi c/o Toyo Seikan Kaisha, Ltd. Technology & Packaging Development Division, Yokohama-shi, Kanagawa 230-0001 (JP); SENBON, Katsumi c/o Toyo Seikan Kaisha, Ltd., Chiyota-ku, Tokyo 100-8522 (JP); MORITA, Yoshiyuki c/o Toyo Seikan Kaisha, Ltd. Technology & Packaging Development Division, Yokohama-shi, Kanagawa 230-0001 (JP)
(74) Representative: von Kreisler Selting Werner
(86) International application number: PCT/JP2006/308372
(87) International publication number: WO 2007/007453

(56) References cited:
- WO-A1-2005/014464
- GB-A- 2 089 191
- JP-A- 06 179 429
- JP-A- 11 043 111
- JP-A- 11 334 709
- JP-A- 2000 185 710
- JP-A- 2000 281 187
- JP-A- 2001 031 010
- JP-A- 2001 163 310
- JP-A- 2001 509 456
- JP-A- 2002 264 912
- JP-A- 2003 191 914

## Description

### Technical Field

This invention relates to a method and an apparatus for manufacturing a beverage contained in a container and, more particularly, to a method and an apparatus which are capable of reducing weight of a container used for manufacturing non-carbonated beverages circulating at room temperature contained in a plastic bottle such as a PET bottle or a metal bottle or a metal can, e.g., a soft drink, mineral water, milk and drink containing milk etc.

### Background Art

As a method for manufacturing non-carbonated beverage circulating at room temperature contained in a plastic bottle such as a PET bottle, there is known a method called the aseptic filling method using a sterilized bottle and a sterilized cap according to which sterilized drink is filled in the plastic bottle in an aseptic environment at room temperature (20 - 30°C) and the bottle is sealed. A plastic bottle used in this method is required to have vertical compression strength during carrying the bottle after forming the bottle in the form of an empty bottle to the filling process. A bottled product after filling is also required to have not only lateral and vertical compression strength but also a vendor strength which is necessary when the product is stored and sold in an automatic vending machine.

On the other hand, for facilitating collapsing a bottle to be destroyed after use from the standpoint of environment protection, and also for saving the cost of material, there is a demand for reduction of thickness and resulting reduction of weight of a bottle. However, a plastic bottle which is reduced in its thickness and weight is naturally reduced in its rigidity. In a case of a PET bottle which is used for the conventional aseptic filling in which its internal pressure after filling is 101KPa which is about the same as atmospheric pressure, for example, if the average thickness of a trunk portion of the bottle is reduced to 0.15mm or below, the bottle filled with a beverage cannot be stacked, due to shortage in rigidity, in three stages of a pallet which is normally practiced for carrying the bottle. This bottle cannot be sold in an automatic vending machine either for shortage of strength.

In the circumstances, various developments and proposals have been made for preventing deformation of the bottle and realizing reduction in weight of the bottle by creating a positive pressure in the bottle. One of such methods is a method according to which liquid nitrogen is filled in a head space of the bottle. This method of filling liquid nitrogen however has posed a serious problem in irregularity of internal pressure produced in the bottle. As another method, there is a method according to which nitrogen gas is forcibly filled into a beverage and thereby is superdissolved in the beverage by using a nitrogen gas filling device such as a carbonator. This nitrogen gas filling method however has the problem that it is difficult to prevent scattering and bubbling of beverage in filling it into the bottle. More specifically, in the aseptic filling, if a mouth of a filling nozzle is brought to close contact with a filling opening of a bottle disposed below, the bottle is soiled with beverage resulting in soiling of the environment. For preventing this, the mouth of the filling nozzle is disposed at a predetermined distance from the filling opening of the bottle. When liquid in which nitrogen gas under a high pressure is dissolved is to be filled in the bottle, the nitrogen gas starts bubbling in a space between the mouth of the filling nozzle and the filling opening of the bottle and the liquid is scattered radially because the nitrogen gas is under a high pressure, making it difficult to fill the liquid in the filling opening of the bottle. It becomes also difficult to clean the filler itself. Further, since the nitrogen gas filled at room temperature tends to leak out of the liquid, it is difficult to realize a positive pressure in the bottle. It is known that, by filling a beverage in a container with a lowered liquid temperature and raising the liquid temperature after filling, internal pressure of the container is elevated. This method however has the problem that the internal pressure available is insufficient. For these reasons, in the aseptic filling method, it is not practiced to create a positive pressure in a bottle by the method of forcing nitrogen gas into a beverage.

In a case of a heat resistant PET bottle, Japanese Patent Application Laid-open Publication No. 2001-31010 discloses a technique according to which, after filling a beverage at a high temperature in a bottle, liquid nitrogen is filled in the bottle to create a positive pressure in the bottle thereby to prevent deformation of the bottle and also reduce weight of the bottle. It is however difficult in this method to control the internal pressure of the bottle and, in a case of a PET bottle for the aseptic filling which does not require heat resisting property and hence has smaller thickness than the heat resistant PET bottle tends to be deformed due to its internal pressure when a beverage is filled under a relatively high pressure because irregularity tends to occur in the internal pressure. For this reason, this method cannot be applied.

In a case of a metal can, Japanese Patent Publication No, 58-55079 discloses a method of filling nitrogen in liquid in a metal can by using a carbonator. In contrast to a metal can which is substantially a rigid body, a plastic bottle which is made of an elastic material is inflated due to internal pressure and, therefore, it is difficult to adopt the internal pressure described in this publication.

The present invention has been made to solve these problems of the prior art methods. A primary object of the present invention is to provide a novel method and apparatus for manufacturing a beverage contained in a container capable of reducing thickness and weight of a container while maintaining vertical and lateral compression strength required for carrying the beverage contained in a container and also a vendor strength necessary for sale in an automatic vending machine.

In an aseptic filling system for food contained in a container, if a positive pressure filling method of filling liquid nitrogen in a container immediately before sealing of the container is performed, it is necessary to provide in an aseptic environment at least a liquid nitrogen filling nozzle in a liquid nitrogen filling apparatus having a liquid nitrogen storage tank and a liquid nitrogen filling nozzle. In this case, in a normal aseptic filling system, the inside of the aseptic environment is periodically cleaned and sterilized with a sterilizer, steam or sterilized water. Therefore, if the liquid nitrogen filling apparatus is provided in an aseptic environment, the liquid nitrogen filling apparatus itself must have adaptability to such cleaning and sterilization. In the present state, however, it is extremely difficult to impart the liquid nitrogen filling apparatus with durability to sterilizer or with a property to prevent freezing in an extremely low temperature portion (e.g., applying a measure for drying the portion perfectly for preventing freezing).

Further, for filling sterilized liquid nitrogen in a container, sterilization of liquid nitrogen itself and sterilization of a liquid nitrogen flow path and a liquid nitrogen storage tank are also necessary. For sterilization of liquid nitrogen, Japanese Patent Application Laid-open Publication No. 2000-185710 proposes to provide a sterilizing filter at a liquid nitrogen supply inlet of a storage tank. It is however difficult in this method to maintain sterilization in a liquid nitrogen flow path in a portion of a liquid nitrogen filling nozzle and perfect sterilized state in this portion cannot be ensured. This literature also proposes a method of heating and sterilizing the liquid nitrogen filling apparatus to maintain sterilization of the apparatus. However, heating of the apparatus requires a large amount of energy and time and, moreover, since the apparatus must stand both ultra low temperature of liquid nitrogen and high temperature due to the high temperature gas, thermal characteristics required for parts of the apparatus are of a broad range from - 200°C to +200°C resulting in restriction in the scope of selecting materials of the parts and requirement for a complex structure of the apparatus.

It is therefore a second object of the invention to provide a method and an apparatus for filling sterilized liquid nitrogen capable of providing the liquid nitrogen filling apparatus in an aseptic environment for filling liquid nitrogen in a head space of a container after filling food in the container and before sealing the container in an aseptic filling system for food contained in a container, and realizing sterilization of liquid nitrogen and sterilization of a liquid nitrogen storage tank, a liquid nitrogen flow path and a filling nozzle of the liquid nitrogen filling apparatus accurately and with a low cost structure.

It is a third object of the invention to provide a sterilized liquid nitrogen filling apparatus for filling liquid nitrogen in a head space of a container after filling food in a container and before sealing the container in an aseptic filling system for food contained in a container capable of realizing sterilization of liquid nitrogen and sterilization of a filling nozzle of the liquid nitrogen filling apparatus accurately with a low cost structure by disposing a part of the liquid nitrogen filling apparatus in the outside of the aseptic environment
GB 2089191 A discloses a method and apparatus for making a hermetically sealed food container.

### Disclosure of the Invention

The method of the invention is defined by the features of independent claim 1 and the apparatus of the invention is defined by the features in independent claim 4. Independent claims 1 and 4 refer in their preambles to GB 2089191 A.

For achieving the above described primary object of the invention, laborious studies and experiments made by the inventors of the present invention have resulted in the finding, which has led to the present invention, that, by filling a beverage in a plastic bottle at a room temperature in an aseptic filling and maintaining the internal pressure of the bottle after sealing at a positive pressure by nitrogen gas, the plastic bottle can be reduced in its thickness and weight while maintaining necessary strength.

Only aspects 13, 14, 17 and 18 are claimed.

In aspect 1 of the invention for achieving the primary object of the invention, there is provided a method for manufacturing a beverage contained in a container comprising:
a container sterilizing process for sterilizing at least an inner surface of a container;
a beverage sterilizing process for sterilizing a beverage;
a filling process for filling the sterilized beverage in the sterilized container at a temperature within a range from 1°C to 40°C;
a sealing process for sealing the container filled with the beverage with a sterilized cap; and
a positive container-internal-pressure maintaining process made before sealing of the container for maintaining a positive internal pressure of the container after sealing,
said container sterilizing process, filling process, positive container-internal-pressure maintaining process and sealing process being respectively performed in an aseptic space.

According to the method, by maintaining the internal pressure of the container after sealing at a positive pressure by the positive container-internal-pressure maintaining process, and conducting filling of the beverage in the container at a temperature within a chilled region or a room temperature region of 1- 40°C, creation of reduced pressure in the head space due to reduction of volume by cooling of the beverage after sealing as in the case of filling at a high temperature is prevented and, moreover, creation of irregularity in the internal pressure of the container due to difficulty in restoration of the deformed container to the original shape as in the case of filling at a high temperature is prevented. As a result, a necessary internal pressure of the container can be always obtained in a stable manner whereby a positive pressure necessary for maintaining vertical and lateral compression strength and vendor strength of the container can be obtained in a stable manner and, to this extent, the container can be reduced in its thickness and weight.

Further, since oxygen in the beverage is driven out by forcible filling of sterilized nitrogen and oxygen in the head space is driven out by evaporating nitrogen during filling, the amount of oxygen in the container at the time of sealing is reduced whereby the amount of oxygen in the beverage is reduced and deterioration of the beverage caused by oxidation and bacteria can be prevented.

In aspect 2 of the invention, there is provided a method as defined in aspect 1 wherein said positive container-internal-pressure maintaining process is a process for filling sterilized liquid nitrogen in a head space of the container after filling the beverage in the container and before sealing the container.

In aspect 3 of the invention, there is provided a method as defined in aspect 1 wherein said positive container-internal-pressure maintaining process is a process in which, after the sterilized beverage in which sterilized nitrogen gas is superdissolved is filled in the container, sterilized liquid nitrogen is filled in a head space of the container before sealing the container.

In aspect 4 of the invention, there is provided a method as defined in aspect 1 wherein said positive container-internal-pressure maintaining process is a process for filling in the container the sterilized beverage in which sterilized nitrogen gas is superdissolved.

In aspect 5 of the invention, there is provided a method as defined in any of aspects 1 - 4 wherein internal pressure of the container after sealing is within a range from 102kPa to 301kPa.

In aspect 6 of the invention, there is provided an apparatus for manufacturing a beverage contained in a container comprising:
container sterilizing means for sterilizing at least an inner surface of a container;
beverage sterilizing means for sterilizing a beverage;
filling means for filling the sterilized beverage in the sterilized container at a temperature within a range from 1°C to 40°C;
a capper for sealing the container filled with the beverage with a sterilized cap; and
positive container-internal-pressure maintaining means for maintaining a positive internal pressure of the container after sealing,
said container sterilizing means, filling means, positive container-internal-pressure maintaining means and capper being respectively disposed in an aseptic space.

In aspect 7 of the invention, there is provided an apparatus as defined in aspect 6 wherein said positive container-internal-pressure maintaining means is liquid nitrogen filling means for filling sterilized liquid nitrogen in a head space of the container after filling the beverage in the container and before sealing the container.

In aspect 8 of the invention, there is provided an apparatus as defined in aspect 6 wherein said positive container-internal-pressure maintaining means is means for filling in the container the sterilized beverage in which sterilized nitrogen gas is superdissolved and then filling sterilized liquid nitrogen in a head space of the container before sealing the container.

In aspect 9 of the invention, there is provided an apparatus as defined in aspect 6 wherein said positive container-internal-pressure maintaining means comprises a sterilizing filter which sterilizes nitrogen gas and means for superdissolving sterilized nitrogen gas in the sterilized beverage and filling the beverage in the container.

In aspect 10 of the invention, there is provided an apparatus as defined in any of aspects 6 - 9 wherein internal pressure of the container after sealing is within a range from 102kPa to 301kPa.

In aspect 11 of the invention, there is provided a container in which a beverage is filled at a filling temperature within a range from 1 °C to 40 °C and internal pressure of the container is maintained at a positive pressure by nitrogen gas contained in a head space of the container.

In aspect 12 of the invention, there is provided a container as defined in aspect 11 wherein the internal pressure of the container is within a range from 102kPa to 301kPa.

For achieving the above described primary object of the invention, in aspect 13, there is provided a method for manufacturing a beverage contained in a container comprising:
a container sterilizing process for sterilizing at least an inner surface of a container;
a beverage sterilizing process for sterilizing a beverage;
a process for dissolving or superdissolving sterilized nitrogen gas in the sterilized beverage;
a process for filling the sterilized beverage in which the nitrogen gas is dissolved or superdissolved in the container; and
a sealing process for sealing the container filled with the beverage with a sterilized cap;
said container sterilizing process, filling process and sealing process being respectively performed in an aseptic space and, in said filling process, a filling nozzle is separated from a filling opening of the container.

According to this aspect of the invention, beverage in which sterilized nitrogen gas is dissolved or superdissolved is filled in the container which is sterilized at least in the inside thereof with the filling nozzle being disposed at a distance from the container and, therefore, the lower surface of the filling nozzle does not contact the top surface of the mouth of the container. Accordingly, even if a small amount of bacteria remains on the top surface of the mouth of the container, contamination of the filling nozzle by the bacteria can be prevented and, therefore, after sealing the container, the container containing beverage and having a positive pressure due to the sterilized nitrogen gas and thereby increased strength can be obtained.

In aspect 14 of the invention, there is provided a method as defined in aspect 13 wherein said process of dissolving or superdissolving sterilized nitrogen gas comprises a process for cooling the sterilized beverage to a temperature within a range from 1°C to 10°C and a process for dissolving or superdissolving the sterilized nitrogen gas in the cooled beverage at a pressure within a range from 101kPa to 201kPa.

According to this aspect of the invention, it becomes easy to dissolve or superdissolve the sterilized nitrogen gas because the beverage is at a low temperature. Moreover, when the temperature of the beverage rises to a temperature close to room temperature (15 - 35°C) after filling of the beverage and sealing of the container, the sterilized nitrogen gas dissolved or superdissolved in the beverage can no longer be dissolved but comes out of the beverage and, therefore, positive internal pressure of the container can be achieved not only by expansion of volume due to increase in temperature of the beverage but also by coming out of the sterilized nitrogen gas. Therefore, even in the present invention in which the sterilized nitrogen gas is filled in the beverage at a low pressure, positive internal pressure in the container can be ensured. Further, since filling of the sterilized nitrogen gas is made at a low pressure, even if filling of the beverage is made with the filling nozzle being separated from the container, there is no likelihood that the nitrogen gas dissolved in the beverage suddenly blows out during filling of the beverage and overflows with the beverage from the container, even if the filling of the beverage is made with the filling nozzle being separated from the container.

In aspect 15 of the invention, there is provided a method as defined in aspect 13 wherein said process of superdissolving sterilized nitrogen gas comprises a process for cooling the sterilized beverage to a temperature within a range from 1°C to 10°C , a process for dissolving or superdissolving the sterilized nitrogen gas in the cooled beverage at a pressure exceeding a desired pressure and a process for reducing the pressure of the beverage in which the nitrogen gas is superdissolved to a desired pressure within a range from 101kPa to 201kPa for storing the container.

According to this aspect, since the sterilized liquid nitrogen is filled at a pressure exceeding a desired pressure and then the pressure is adjusted to the desired pressure, irregularity in the pressure in the sealed container can be reduced and there is no likelihood that an abnormally inflated container or a container containing beverage with insufficient internal pressure is produced.

In aspect 16 of the invention, there is provided a method as defined in aspect 14 or 15 wherein a process for warming the sealed container to a temperature within a range from 15°C to 30°C is provided after said sealing process.

According to this aspect of the invention, the container filled with beverage is warmed to 15 - 30°C, the internal pressure of the container is made positive soon. As a result, when this container is put in a carton case and stacked one upon another immediately after the filling and sealing process, there is no likelihood that the container is deformed or damaged by buckling in the case

In aspect 17 of the invention, there is provided an apparatus for manufacturing a beverage contained in a container comprising:
container sterilizing means for sterilizing at least an inner surface of a container;
beverage sterilizing means for sterilizing a beverage;
nitrogen gas dissolving means for dissolving or superdissolving sterilized nitrogen gas in the sterilized beverage;
filling means for filling the sterilized beverage in which the nitrogen gas is dissolved or superdissolved in the container; and
a capper for sealing the container filled with the beverage with a sterilized cap;
said container sterilizing means, filling means and capper being respectively disposed in an aseptic space and, in said filling means, a filling nozzle is separated from a filling opening of the container.

In aspect 18 of the invention, there is provided an apparatus as defined in aspect 17 wherein said means for dissolving or superdissolving sterilized nitrogen gas comprises cooling means for cooling the sterilized beverage to a temperature within a range from 1°C to 10°C and nitrogen gas dissolving means for dissolving or superdissolving the sterilized nitrogen gas in the cooled beverage at a pressure within a range from 101kPa to 201kPa.

In aspect 19 of the invention, there is provided an apparatus as defined in aspect 17 wherein said means for dissolving or superdissolving sterilized nitrogen gas comprises cooling means for cooling the sterilized beverage to a temperature within a range from 1 °C to 10 °C , nitrogen gas dissolving means for superdissolving the sterilized nitrogen gas in the cooled beverage at a pressure exceeding a desired pressure and storing means for reducing the pressure of the beverage in which the nitrogen gas is superdissolved to a desired pressure within a range from 101kPa to 201kPa and storing the container.

In aspect 20 of the invention, there is provided an apparatus as defined in claim 18 or 19 wherein means for warming the sealed container to a temperature within a range from 15°C to 30°C is provided after said sealing means.

According to aspects 17 - 20, an apparatus for manufacturing a beverage contained in a container having the same effects as those of aspects 13 - 16 can be obtained.

For achieving the second object of the invention, in aspect 21, there is provided a method for filling sterilized liquid nitrogen in a head space of a container after filling food in the container and before sealing the container in an aseptic system for filling food in the container characterized by filling liquid nitrogen in the container through a sterilizing process in which liquid nitrogen is filtered by a nozzle sterilizing filter disposed at least in either of a liquid nitrogen flow path from a liquid nitrogen storage tank to a filling nozzle or the filling nozzle in a space within a protecting cover which covers the liquid nitrogen storage tank, the liquid nitrogen flow path from the liquid nitrogen storage tank to the filling nozzle and the filling nozzle disposed in an aseptic environment of the aseptic filling system from sterilizer and rinsing water scattered for sterilizing and rinsing the aseptic environment of the aseptic filling system.

According to aspect 21, by covering, with a protecting cover, the liquid nitrogen storage tank, the liquid nitrogen flow path from the liquid nitrogen storage tank to the filling nozzle and the filling nozzle disposed in an aseptic environment of the aseptic filling system from sterilizer and rinsing water scattered for sterilizing and rinsing the aseptic environment of the aseptic filling system, the main portion of the liquid nitrogen filling apparatus consisting of the liquid nitrogen storage tank, liquid nitrogen flow path leading to the filling nozzle and the filling nozzle can be protected from sterilizer and, therefore, even an apparatus including a normal liquid nitrogen filling nozzle and tank which has no particular sterilizing and rinsing characteristics can be provided in the aseptic environment.

Further, since the sterilizing process is performed by filtering the liquid nitrogen by the nozzle sterilizing filter disposed in the liquid nitrogen flow path from the liquid nitrogen storage tank to the filling nozzle or the filling nozzle in the space within the protecting cover, and preferably additionally by the supply nitrogen sterilizing filter provided in the liquid nitrogen flow path from the liquid nitrogen supply source disposed in the outside of the aseptic environment to the liquid nitrogen supply inlet of the liquid nitrogen storage tank, the liquid nitrogen can be sterilized with a simple and low cost structure and sterilizing of the liquid nitrogen storage tank, liquid nitrogen flow path and filling nozzle can also be achieved.

In aspect 22 of the invention, there is provided a sterilized liquid nitrogen filling method as defined in aspect 21 wherein the liquid nitrogen is further filtered by a supply nitrogen sterilizing filter which is disposed in a liquid nitrogen flow path from a liquid nitrogen supply source to a liquid nitrogen supply inlet of the liquid nitrogen storage tank.

In aspect 23 of the invention, there is provided a sterilized liquid nitrogen filling method as defined in aspect 22 wherein the supply nitrogen sterilizing filter is disposed in the liquid nitrogen flow path in the vicinity of the liquid nitrogen supply inlet in the liquid nitrogen storage tank.

According to this aspect of the invention, since the supply nitrogen sterilizing filter is disposed in the liquid nitrogen flow path in the vicinity of the liquid nitrogen supply inlet in the liquid nitrogen storage tank, possibility that the liquid nitrogen storage tank will be contaminated by bacteria contained in the liquid nitrogen can be held at minimum.

In aspect 24 of the invention, there is provided a sterilized liquid nitrogen filling method as defined in any of aspects 21 - 23 which further comprises a process of sterilizing at least either the liquid nitrogen flow path between the nozzle sterilizing filter and the filling nozzle or the filling nozzle.

According to this aspect, the liquid nitrogen flow path and/or filling nozzle sterilizing process or means is provided in which at least either the liquid nitrogen flow path between the nozzle sterilizing filter and the filling nozzle or the filling nozzle is sterilized, sterilizing of the liquid nitrogen itself and the liquid nitrogen flow path and filling nozzle can be realized further accurately.

In aspect 25 of the invention, there is provided a sterilized liquid nitrogen filling method as defined in aspect 24 wherein the process of sterilizing at least either the liquid nitrogen flow path or the filling nozzle is performed by a heater which is provided at least either in the liquid nitrogen flow path between the nozzle sterilizing filter and the filling nozzle or the filling nozzle and sterilizes by heating at least either the liquid nitrogen flow path between the nozzle sterilizing filter and the filling nozzle or the filling nozzle.

In aspect 26 of the invention, there is provided a sterilized liquid nitrogen filling method as defined in aspect 24 wherein a hot water supply source and a drying gas supply source are switchably communicated at least either with the liquid nitrogen flow path between the nozzle sterilizing filter and the filling nozzle or with the filling nozzle and the process of sterilizing at least either the liquid nitrogen flow path or the filling nozzle is performed by sterilizing at least either the liquid nitrogen flow path or the filling nozzle by supplying hot water from the hot water supply source and then drying at least either the liquid nitrogen flow path or the filing nozzle by supplying drying gas from the drying gas supply source.

In aspect 27 of the invention, there is provided a sterilized liquid nitrogen filling method as defined in aspect 24 wherein a steam supply source and a drying gas supply source are switchably communicated at least either with the liquid nitrogen flow path between the nozzle sterilizing filter and the filling nozzle or with the filling nozzle and the process of sterilizing at least either the liquid nitrogen flow path or the filling nozzle is performed by sterilizing at least either the liquid nitrogen flow path or the filling nozzle by supplying steam from the steam supply source and then drying at least either the liquid nitrogen flow path or the filing nozzle by supplying drying gas from the drying gas supply source.

In aspect 28 of the invention, there is provided a sterilized liquid nitrogen filling method as defined in aspect 24 wherein a sterilizer supply source and a drying gas supply source are switchably communicated at least either with the liquid nitrogen flow path between the nozzle sterilizing filter and the filling nozzle or with the filling nozzle and the process of sterilizing at least either the liquid nitrogen flow path or the filling nozzle is performed by sterilizing at least either the liquid nitrogen flow path or the filling nozzle by supplying a sterilizer from the sterilizer supply source and then drying at least either the liquid nitrogen flow path or the filing nozzle by supplying drying gas from the drying gas supply source.

In aspect 29 of the invention, there is provided a sterilized liquid nitrogen filling method as defined in aspect 24 wherein a sterilized water supply source and a drying gas supply source are switchably communicated at least either with the liquid nitrogen flow path between the nozzle sterilizing filter and the filling nozzle or with the filling nozzle and the process of sterilizing at least either the liquid nitrogen flow path or the filling nozzle is performed by sterilizing at least either the liquid nitrogen flow path or the filling nozzle by supplying sterilized water from the sterilized water supply source and then drying at least either the liquid nitrogen flow path or the filing nozzle by supplying drying gas from the drying gas supply source.

In aspect 30 of the invention, there is provided a sterilized liquid nitrogen filling method as defined in aspect 21 further comprising a process of exhausting nitrogen gas evaporating from liquid nitrogen stored in the liquid nitrogen storage tank to the outside of the aseptic environment.

In aspect 31 of the invention, there is provided a sterilized liquid nitrogen filling method as defined in aspect 21 further comprising a process of exhausting nitrogen gas evaporating from liquid nitrogen stored in the liquid nitrogen storage tank to the outside of the aseptic environment after sterilizing the nitrogen gas.

In aspect 32 of the invention, there is provided a sterilized liquid nitrogen filling apparatus for filling sterilized liquid nitrogen in a head space of a container after filling food in the container and before sealing the container in an aseptic system for filling food in the container comprising:
a liquid nitrogen storage tank;
a liquid nitrogen flow path from the liquid nitrogen storage tank to a filling nozzle and the filling nozzle; said storage tank, liquid nitrogen flow path and filling nozzle being disposed in an aseptic environment of the aseptic filling system,
a protecting cover for covering the liquid nitrogen storage tank, liquid nitrogen flow path and filling nozzle from sterilizer and rinsing water scattered for sterilizing and rinsing the aseptic environment;
a liquid nitrogen supply source disposed in the outside of the aseptic environment; and
a nozzle sterilizing filter disposed either in the liquid nitrogen flow path from the liquid nitrogen storage tank to the filling nozzle or in the filling nozzle in the space within the protecting cover.

In aspect 33 of the invention, there is provided a sterilized liquid nitrogen filling apparatus as defined in aspect 32 further comprising a supply nitrogen sterilizing filter disposed in the liquid nitrogen flow path from the liquid nitrogen supply source to a liquid nitrogen supply inlet of the liquid nitrogen storage tank.

In aspect 34 of the invention, there is provided a sterilized liquid nitrogen filling apparatus as defined in aspect 33 wherein the supply nitrogen sterilizing filter is disposed in the liquid nitrogen flow path in the vicinity of the liquid nitrogen supply inlet in the liquid nitrogen storage tank.

In aspect 35 of the invention, there is provided a sterilized liquid nitrogen filling apparatus as defined in any of aspects 32 - 34 further comprising liquid nitrogen flow path and/or filling nozzle sterilizing means for sterilizing at least either the liquid nitrogen flow path from the nozzle sterilizing filter to the filling nozzle or the filling nozzle.

In aspect 36 of the invention, there is provided a sterilizing liquid nitrogen filling apparatus as defined in aspect 35 wherein the liquid nitrogen flow path and/or filling nozzle sterilizing means is a heater which is disposed at least in either the liquid nitrogen flow path from the nozzle sterilizing filter to the filling nozzle or the filling nozzle and sterilizes by heating at least either the liquid nitrogen flow path or the filling nozzle.

In aspect 37 of the invention, there is provided a sterilized liquid nitrogen filling apparatus as defined in aspect 35 wherein the liquid nitrogen flow path and/or filling nozzle sterilizing means comprises a hot water supply source and a drying gas supply source which can be communicated switchably to either the liquid nitrogen flow path from the nozzle sterilizing filter to the filling nozzle or the filling nozzle, and sterilizes at least either the liquid nitrogen flow path or the filling nozzle by sterilizing at least either the liquid nitrogen flow path or the filling nozzle by supplying hot water from the hot water supply source and then drying at least either the liquid nitrogen flow path or the filing nozzle by supplying drying gas from the drying gas supply source.

In aspect 38 of the invention, there is provided a sterilized liquid nitrogen filling apparatus as defined in aspect 35 wherein the liquid nitrogen flow path and/or filling nozzle sterilizing means comprises a steam supply source and a drying gas supply source which can be communicated switchably to either the liquid nitrogen flow path from the nozzle sterilizing filter to the filling nozzle or the filling nozzle, and sterilizes at least either the liquid nitrogen flow path or the filling nozzle by sterilizing at least either the liquid nitrogen flow path or the filling nozzle by supplying steam from the steam supply source and then drying at least either the liquid nitrogen flow path or the filing nozzle by supplying drying gas from the drying gas supply source.

In aspect 39 of the invention, there is provided a sterilized liquid nitrogen filling apparatus as defined in aspect 35 wherein the liquid nitrogen flow path and/or filling nozzle sterilizing means comprises a sterilizer supply source and a drying gas supply source which can be communicated switchably to either the liquid nitrogen flow path from the nozzle sterilizing filter to the filling nozzle or the filling nozzle, and sterilizes at least either the liquid nitrogen flow path or the filling nozzle by sterilizing at least either the liquid nitrogen flow path or the filling nozzle by supplying sterilizer from the sterilizer supply source and then drying at least either the liquid nitrogen flow path or the filing nozzle by supplying drying gas from the drying gas supply source.

In aspect 40 of the invention, there is provided a sterilized liquid nitrogen filling apparatus as defined in aspect 35 wherein the liquid nitrogen flow path and/or filling nozzle sterilizing means comprises a sterilized water supply source and a drying gas supply source which can be communicated switchably to either the liquid nitrogen flow path from the nozzle sterilizing filter to the filling nozzle or the filling nozzle, and sterilizes at least either the liquid nitrogen flow path or the filling nozzle by sterilizing at least either the liquid nitrogen flow path or the filling nozzle by supplying sterilized water from the sterilized water supply source and then drying at least either the liquid nitrogen flow path or the filing nozzle by supplying drying gas from the drying gas supply source.

In aspect 41 of the invention, there is provided a sterilized liquid nitrogen filling apparatus as defined in aspect 32 or 33 wherein the liquid nitrogen flow path from the nozzle sterilizing filter to the filling nozzle can be removed for sterilizing it in the outside of the aseptic environment.

According to this aspect, the liquid nitrogen flow path from the nozzle sterilizing filter to the filling nozzle can be removed for sterilizing it in the outside of the aseptic environment and, therefore, the liquid nitrogen flow path can be sterilized in a simple manner.

In aspect 42 of the invention, there is provided a sterilized liquid nitrogen filling apparatus as defined in aspect 32 or 33 wherein the filling nozzle can be removed for sterilizing it in the outside of the sterilized environment.

In aspect 43 of the invention, there is provided a sterilized liquid nitrogen filling apparatus as defined in aspect 32 further comprising an exhaust pipe for exhausting nitrogen gas evaporating from liquid nitrogen stored in the liquid nitrogen storage tank to the outside of the aseptic environment.

According to this aspect of the invention, since the apparatus further comprises an exhaust pipe for exhausting nitrogen gas evaporating from liquid nitrogen stored in the liquid nitrogen storage tank to the outside of the aseptic environment, even in case the liquid nitrogen in the liquid nitrogen storage tank is contaminated, contamination of the aseptic environment by the nitrogen gas evaporating from the liquid nitrogen can be prevented.

In aspect 44 of the invention, there is provided a sterilized liquid nitrogen filling apparatus as defined in aspect 32 further comprising an exhaust pipe for exhausting nitrogen gas evaporating from liquid nitrogen stored in the liquid nitrogen storage tank to the inside of the aseptic environment and a sterilizing filter disposed in an exhaust gas flow path in the exhaust pipe.

According to this aspect, since the apparatus further comprises an exhaust pipe for exhausting nitrogen gas evaporating from liquid nitrogen stored in the liquid nitrogen storage tank to the inside of the aseptic environment and a sterilizing filter disposed in an exhaust gas flow path in the exhaust pipe, even in case the liquid nitrogen in the liquid nitrogen storage tank is contaminated, contamination of the aseptic environment by the nitrogen gas evaporating from the liquid nitrogen can be prevented.

In aspect 45 of the invention, there is provided a sterilized liquid nitrogen filing apparatus as defined in aspect 32 wherein a strainer for removing dust is provided in a liquid nitrogen supply pipe upstream of the liquid nitrogen supply source.

According to this aspect, since a strainer for removing dust is provided in a liquid nitrogen supply pipe upstream of the liquid nitrogen supply source, dust of a relative large size other than bacteria can be removed by this strainer before the sterilizing process.

For achieving the third object of the invention, in aspect 46 of the invention, there is provided a sterilized liquid nitrogen filling apparatus for filling sterilized liquid nitrogen in a head space of a container after filling food in the container and before sealing the container in an aseptic system for filling food in the container comprising:
a liquid nitrogen storage tank;
a liquid nitrogen flow path from the liquid nitrogen storage tank to a filling nozzle and the filling nozzle;
a filling nozzle having an outer wall consisting of a material capable of shielding the filling nozzle from sterilizer and rinsing water scattered for sterilizing and rinsing the sterilized environment;
a liquid nitrogen supply source for supplying liquid nitrogen to the liquid nitrogen storage tank; and
a nozzle sterilizing filter disposed either in the liquid nitrogen flow path from the liquid nitrogen storage tank to the filling nozzle or in the filling nozzle; said liquid nitrogen storage tank, liquid nitrogen flow path and liquid nitrogen supply source being disposed in the outside of the aseptic environment and said filling nozzle being disposed in the inside of the aseptic environment.

According to this aspect of the invention, since the liquid nitrogen storage tank, liquid nitrogen flow path and liquid nitrogen supply source in the sterilized liquid nitrogen filling apparatus are disposed in the outside of the aseptic environment, these parts are not disposed to sterilizer and rinsing water scattered for sterilizing and rinsing the inside of the aseptic environment. On the other hand, since the filling nozzle disposed in the inside of the aseptic environment has an outer wall consisting of a material capable of shielding the filling nozzle from sterilizer and rinsing water scattered for sterilizing and rinsing the aseptic environment, the filling nozzle can be protected from sterilizer and rinsing water. Thus, for filling sterilized liquid nitrogen in the head space of the container in the aseptic filling system, sterilizing of the liquid nitrogen and sterilizing of the filling nozzle of the liquid nitrogen filling apparatus can be realized accurately with a simple and low cost structure.

Further, since the sterilizing process is performed by filtering the liquid nitrogen by the nozzle sterilizing filter disposed in the liquid nitrogen flow path from the liquid nitrogen storage tank to the filling nozzle or the filling nozzle, and preferably additionally by the supply nitrogen sterilizing filter provided in the liquid nitrogen flow path from the liquid nitrogen supply source disposed in the outside of the aseptic environment to the liquid nitrogen supply inlet of the liquid nitrogen storage tank, the liquid nitrogen can be sterilized with a simple and low cost structure and sterilizing of the liquid nitrogen storage tank, liquid nitrogen flow path and filling nozzle can also be achieved.

In aspect 47 of the invention, there is provided a sterilized liquid nitrogen filling apparatus as defined in aspect 46 further comprising a supply nitrogen sterilizing filter disposed in the liquid nitrogen flow path from the liquid nitrogen supply source to a liquid nitrogen supply inlet of the liquid nitrogen storage tank.

In aspect 48 of the invention, there is provided a sterilized liquid nitrogen filling apparatus as defined in aspect 47 wherein the supply nitrogen sterilizing filter is disposed in the liquid nitrogen flow path in the vicinity of the liquid nitrogen supply inlet in the liquid nitrogen storage tank.

According to this aspect, since the supply nitrogen sterilizing filter is disposed in the liquid nitrogen flow path in the vicinity of the liquid nitrogen supply inlet in the liquid nitrogen storage tank, possibility that the liquid nitrogen storage tank will be contaminated by bacteria contained in the liquid nitrogen can be held at minimum.

In aspect 49 of the invention, there is provided a sterilized liquid nitrogen filling apparatus as defined in any of aspects 46 - 48 further comprising liquid nitrogen flow path and/or filling nozzle sterilizing means for sterilizing at least either the liquid nitrogen flow path from the nozzle sterilizing filter and the filling nozzle or the filling nozzle.

According to this aspect, since there is provided liquid nitrogen flow path and/or filling nozzle sterilizing means for sterilizing at least either the liquid nitrogen flow path between the nozzle sterilizing filter and the filling nozzle or the filling nozzle, sterilization of liquid nitrogen itself and sterilization of the liquid nitrogen flow path and filling nozzle can be realized further accurately.

In aspect 50 of the invention, there is provided a sterilizing liquid nitrogen filling apparatus as defined in aspect 49 wherein the liquid nitrogen flow path and/or filling nozzle sterilizing means is a heater which is disposed at least in either the liquid nitrogen flow path from the nozzle sterilizing filter to the filling nozzle and sterilizes by heating at least either the liquid nitrogen flow path or the filling nozzle.

In aspect 51 of the invention, there is provided a sterilized liquid nitrogen filling apparatus as defined in aspect 49 wherein the liquid nitrogen flow path and/or filling nozzle sterilizing means comprises a hot water supply source and a drying gas supply source which can be communicated switchably to either the liquid nitrogen flow path from the nozzle sterilizing filter to the filling nozzle or the filling nozzle, and sterilizes at least either the liquid nitrogen flow path or the filling nozzle by sterilizing at least either the liquid nitrogen flow path or the filling nozzle by supplying hot water from the hot water supply source and then drying at least either the liquid nitrogen flow path or the filing nozzle by supplying drying gas from the drying gas supply source.

In aspect 52 of the invention, there is provided a sterilized liquid nitrogen filling apparatus as defined in aspect 49 wherein the liquid nitrogen flow path and/or filling nozzle sterilizing means comprises a steam supply source and a drying gas supply source which can be communicated switchably to either the liquid nitrogen flow path from the nozzle sterilizing filter to the filling nozzle or the filling nozzle, and sterilizes at least either the liquid nitrogen flow path or the filling nozzle by sterilizing at least either the liquid nitrogen flow path or the filling nozzle by supplying steam from the steam supply source and then drying at least either the liquid nitrogen flow path or the filing nozzle by supplying drying gas from the drying gas supply source.

In aspect 53 of the invention, a sterilized liquid nitrogen filling apparatus as defined in aspect 49 wherein the liquid nitrogen flow path and/or filling nozzle sterilizing means comprises a sterilizer supply source and a drying gas supply source which can be communicated switchably to either the liquid nitrogen flow path from the nozzle sterilizing filter to the filling nozzle or the filling nozzle, and sterilizes at least either the liquid nitrogen flow path or the filling nozzle by sterilizing at least either the liquid nitrogen flow path or the filling nozzle by supplying sterilizer from the sterilizer supply source and then drying at least either the liquid nitrogen flow path or the filing nozzle by supplying drying gas from the drying gas supply source.

In aspect 54 of the invention, there is provided a sterilized liquid nitrogen filling apparatus as defined in aspect 49 wherein the liquid nitrogen flow path and/or filling nozzle sterilizing means comprises a sterilized water supply source and a drying gas supply source which can be communicated switchably to either the liquid nitrogen flow path from the nozzle sterilizing filter to the filling nozzle or the filling nozzle, and sterilizes at least either the liquid nitrogen flow path or the filling nozzle by sterilizing at least either the liquid nitrogen flow path or the filling nozzle by supplying sterilized water from the sterilized water supply source and then drying at least either the liquid nitrogen flow path or the filing nozzle by supplying drying gas from the drying gas supply source.

In aspect 55 of the invention, there is provided a sterilized liquid nitrogen filling apparatus as defined in aspect 46 further comprising an elevating and lowering mechanism for elevating and lowering the filling nozzle between the inside and outside of the sterilized environment.

According to this aspect, since there is provided an elevating and lowering mechanism for elevating and lowering the filling nozzle between the inside and outside of the sterilized environment, the filing nozzle can be moved easily to the outside of the aseptic environment for maintenance such as exchange of a heater and nozzle sterilizing filter which are provided about the nozzle for sterilizing the filling nozzle and the filling nozzle can be restored easily to the original position in the aseptic environment after completion of the maintenance.

### Brief Description of the Drawings

Fig. 1 is an explanatory view schematically showing an embodiment of the apparatus for manufacturing a beverage contained in a plastic bottle according to the invention.
Fig. 2 is an explanatory view showing a modified embodiment of the apparatus of Fig. 1.
Fig. 3 is an explanatory view showing another modified embodiment of the apparatus of Fig. 1.
Fig. 4 is an explanatory view schematically showing another embodiment of the apparatus for manufacturing a beverage contained in a plastic bottle according to the invention.
Fig. 5 is an explanatory view schematically showing another embodiment of the apparatus for manufacturing a beverage contained in a plastic bottle according to the invention.
Fig. 6 is a view showing a plastic bottle used in the first embodiment.

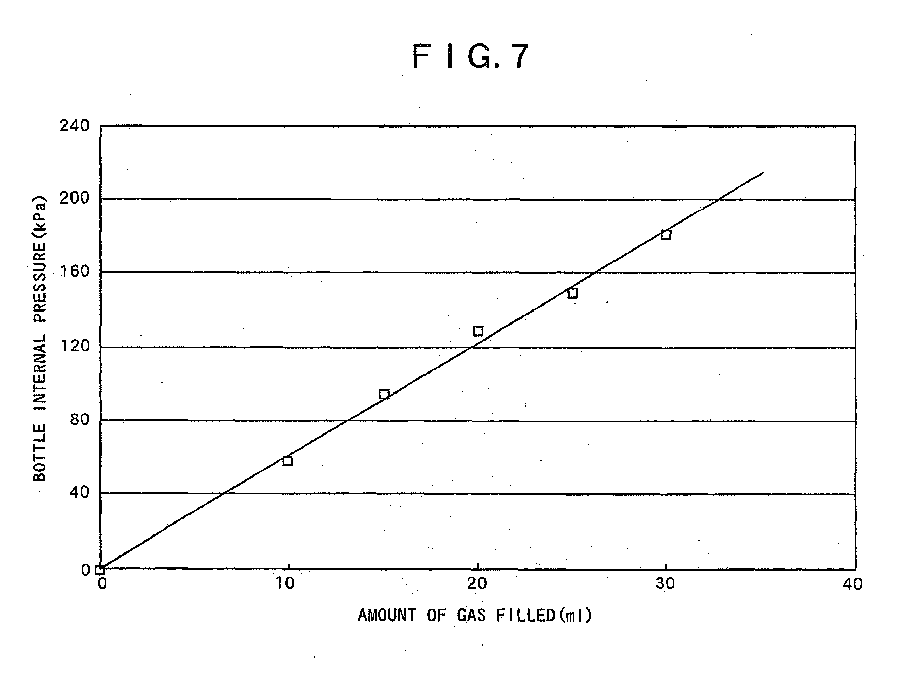

Fig. 7 is a graph showing relation between amount of filled nitrogen and internal pressure of the bottle.

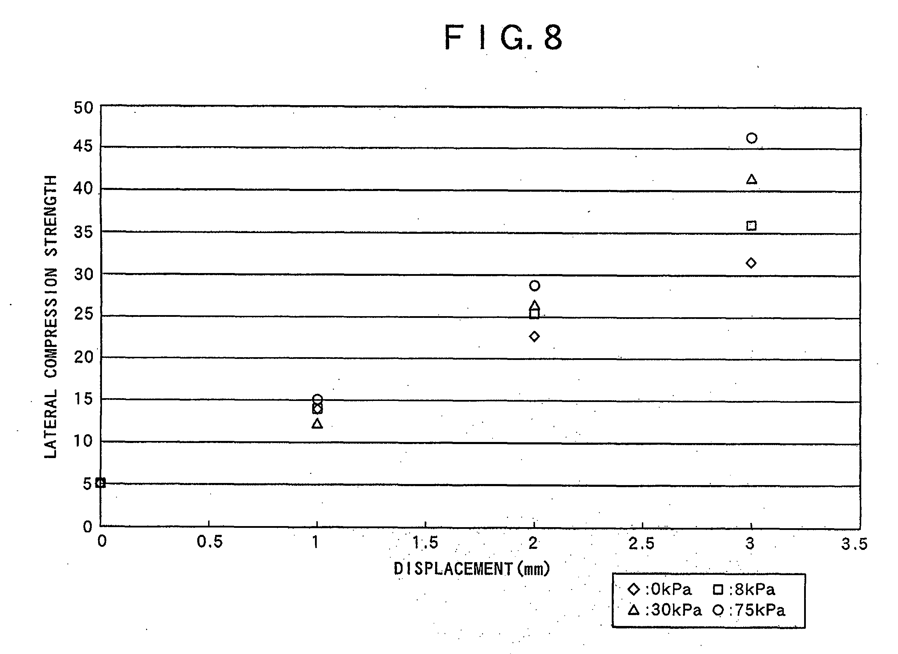

Fig. 8 is a graph showing relation between amount of displacement and lateral compression strength of the bottle.
Fig. 9 is an explanatory view schematically showing another embodiment of the apparatus for manufacturing a beverage contained in a container according to the invention.
Fig. 10 is an explanatory view showing a modified embodiment of the apparatus of Fig. 9.
Fig. 11 is an explanatory view showing another modified embodiment of the apparatus of Fig. 9.
Fig. 12 is an explanatory view schematically showing another embodiment of the apparatus for manufacturing a beverage contained in a container according to the invention.
Fig. 13 is a schematic view showing an embodiment of the sterilized liquid nitrogen filling apparatus according to the invention.
Fig. 14 is a schematic view showing an example of an aseptic food filling apparatus to which the sterilized liquid nitrogen filling apparatus of the invention is applied.
Fig. 15 is a schematic view showing another embodiment of the sterilized liquid nitrogen filling apparatus of the invention.
Fig. 16 is a schematic view showing another embodiment of the sterilized liquid nitrogen filling apparatus of the invention.
Fig. 17 is a schematic view showing an example of an aseptic food filling apparatus to which the sterilized liquid nitrogen filling apparatus of the invention is applied.

### Preferred Embodiments for Carrying Out the Invention

Embodiments of the invention will now be described with reference to the accompanying drawings.

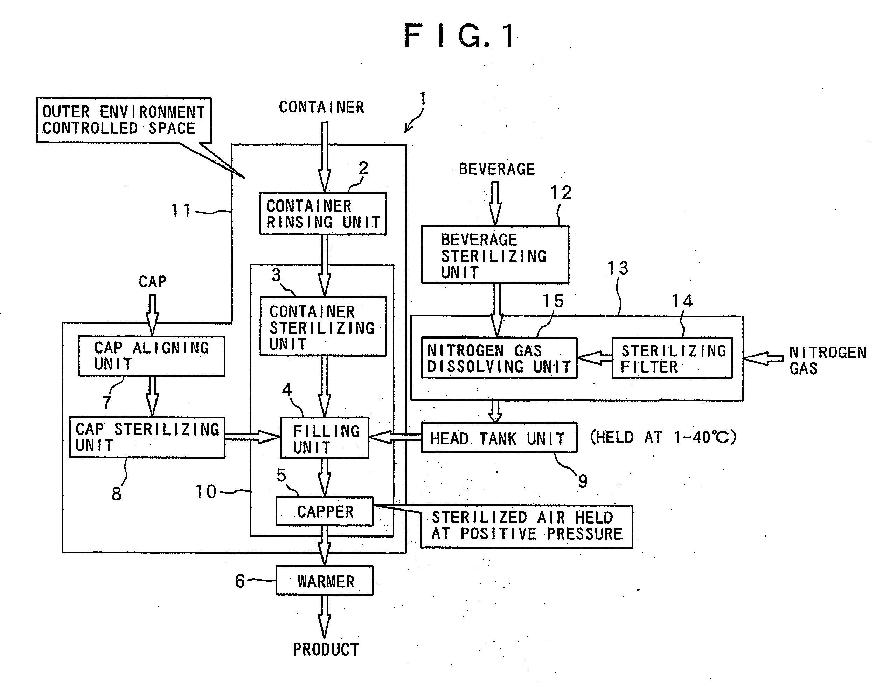

Figs. 1 - 5 are explanatory views schematically showing various embodiments for carrying out the manufacturing method of the present invention. These embodiments correspond to the above described aspects 1 to 12 of the invention.

Containers to which the present invention is applied are plastic bottles including PET bottles and other polyester bottles as well as metal cans having a small thickness such as bottle cans. Beverages to which the present invention is applied are non-carbonated beverages circulating at room temperature such, for example, as soft drinks, mineral water, milk and drinks containing milk.

The method of the present embodiment comprises a container sterilizing process for sterilizing at least an inside surface of a container; a beverage sterilizing process for sterilizing a beverage; a filling process for filling the sterilized beverage in the sterilized container at a temperature within a range from 1°C to 40°C; a sealing process for sealing the container filled with the beverage with a sterilized cap; and a positive container-internal-pressure maintaining process made before sealing of the container for maintaining a positive internal pressure of the container after sealing, said container sterilizing process, beverage sterilizing process, positive container-internal-pressure maintaining process and sealing process being respectively performed in an aseptic space.

The aseptic space herein means a sealed space formed by defining a part of a working room having an entrance and exit for carrying in and out containers where sterilized air of a positive pressure is introduced to maintain the aseptic state.

An embodiment of an apparatus for carrying out the invention is shown in Fig. 1. This apparatus 1 has a container rinsing unit 2, a container sterilizing unit 3, a filling unit 4, a capper 5 and a warmer 6 in the order of conveying a container. The filling unit 4 is connected to a cap sterilizing unit 8 and a head tank unit 9 containing a beverage. The container sterilizing unit 3, filling unit 4 and capper 5 are disposed in an aseptic space 10 and the container rinsing unit 2, a cap aligning unit 7 and cap sterilizing unit 8 are disposed in an outer environment controlled space 11. The outer environment controlled space herein means an outer environment formed by defining a working room or a part of a working room which is controlled in its aseptic state to a predetermined class or below this class. As the outer environment controlled space, a space of Class 100,000 or below is preferred. A clean room for example is a preferable outer environment controlled space.

A container carried from outside is first rinsed in its inside and outside surfaces by the container rinsing unit 2 and then is transferred to the container sterilizing unit 3 where at least the inside surface of the container, preferably both inside and outside surface of the container, are sterilized. Sterilizing of the container can be achieved by spraying warm water or applying steam on the surface of the container until the temperature of the surface to be sterilized of the container reaches 60°C or over, preferably 65°C or over.

After finishing sterilization, the container is transferred to the filling unit where the beverage contained in the head tank unit 9 is filled in the container. In the head tank unit 9, the beverage which has been warmed to a predetermined temperature with a range from 1°C to 40°C is stored.

The head tank unit 9 is connected to a beverage sterilizing unit 12 through a positive container-internal-pressure maintaining unit 13. The positive container-internal-pressure maintaining unit 13 is a unit for carrying out, before sealing of the container, the positive container-internal-pressure maintaining process for maintaining the internal pressure of the container after sealing at a positive pressure. This unit 13 consists of a sterilizing filter 14 for sterilizing nitrogen gas and a nitrogen gas dissolving unit 15. The beverage is sterilized by heating it to a predetermined sterilizing temperature by the beverage sterilizing unit 12 and then is cooled and supplied to the nitrogen gas dissolving unit 15 of the positive container-internal-pressure maintaining unit 13. Sterilized nitrogen gas is sent to the nitrogen gas dissolving unit 15 through the sterilizing filter 14 and is superdissolved in the sterilized beverage. More specifically, by causing nitrogen gas to contact the beverage at a temperature below room temperature and under pressure, the nitrogen gas is forcibly dissolved in the beverage. This dissolving method is known by, for example, Japanese Patent Publication No. 58-55079 and, as the nitrogen gas dissolving unit 15, a known carbonator, a micro bubble device in which nitrogen gas is turned to micro bubbles in a pipe and then is filled in a beverage and a static mixer in which an orifice or a venture pipe is provided to mix and stir filled nitrogen gas in a beverage can be used.

Since a plastic bottle is inflated by evaporation of nitrogen gas filled in a beverage and pressure of gas filled in the bottle thereby drops, this must be taken into consideration in determining the pressure of gas.

The beverage in which nitrogen gas is dissolved in the nitrogen gas dissolving unit 15 is supplied from the head tank unit 9 to the filling unit 4 and filled in the container which has been transferred from the container sterilizing unit 3. The filling temperature is a predetermined temperature within a range from 1°C to 40°C. In the meanwhile, a cap supplied from an unillustrated cap supply source is sterilized by the cap sterilizing unit 8 through the cap aligning unit 7 and then is put on a mouth portion of the container immediately after filling of the beverage in the container.

The bottle fitted with the cap is immediately transferred to the capper 5 and sealed with the cap. Since the head space of the bottle is at a normal pressure during this time, the nitrogen gas dissolved in the beverage is evaporated to make the internal pressure of the bottle positive. An internal pressure of the head space suitable for securing necessary strength of the bottle is 102kPa - 301kPa.

The sealed container is transferred to the warmer 6 to be warmed to a predetermined temperature and shipped as a product.

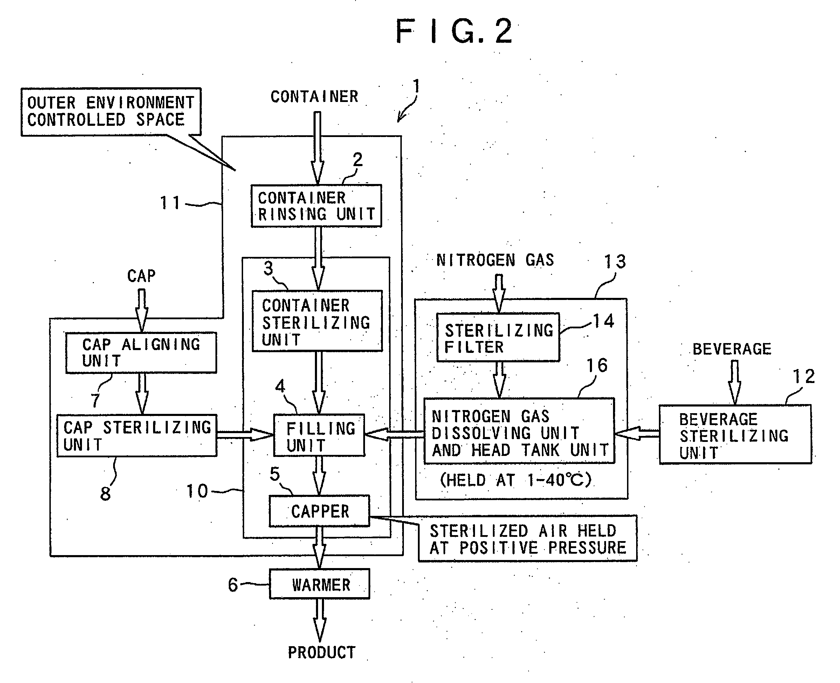

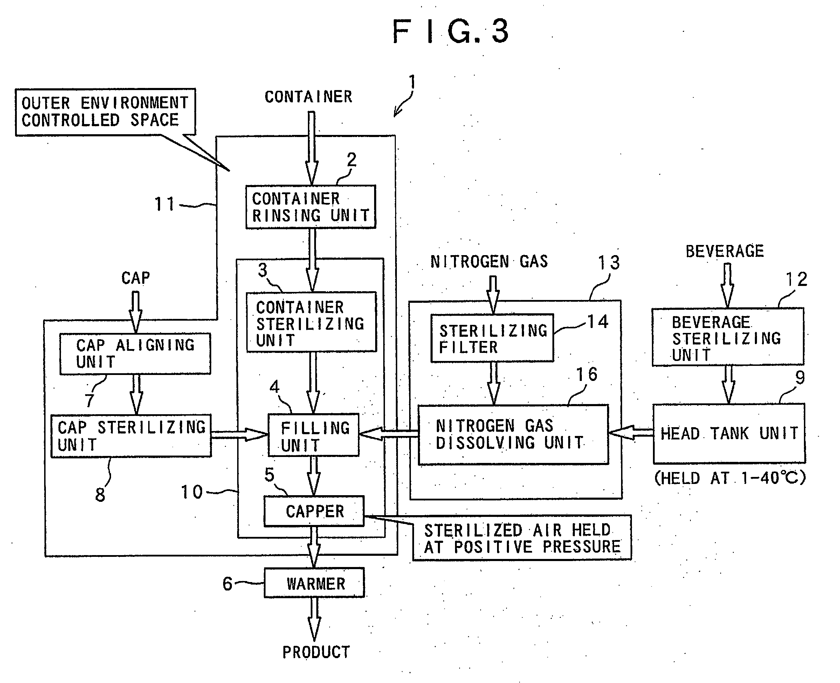

Figs. 2 and 3 are explanatory views showing modified embodiments of the embodiment of Fig. 1. In Figs. 2 through 4, the same component parts as those of Fig. 1 are designated by the same reference characters and detailed description thereof will be omitted.

The apparatus shown in Fig. 2 is different from the apparatus of Fig. 1 in that the nitrogen gas dissolving unit 16 of the positive container-internal-pressure maintaining unit 13 serves also as the head tank unit and is the same as the apparatus of Fig. 1 in other structure and function.

The apparatus shown in Fig. 3 is different from the apparatus of Fig. 1 in that the head tank unit 9 is disposed before the nitrogen gas dissolving unit 15 and is connected directly to the beverage sterilizing unit and is the same as the apparatus of Fig. 1 in other structure and function.

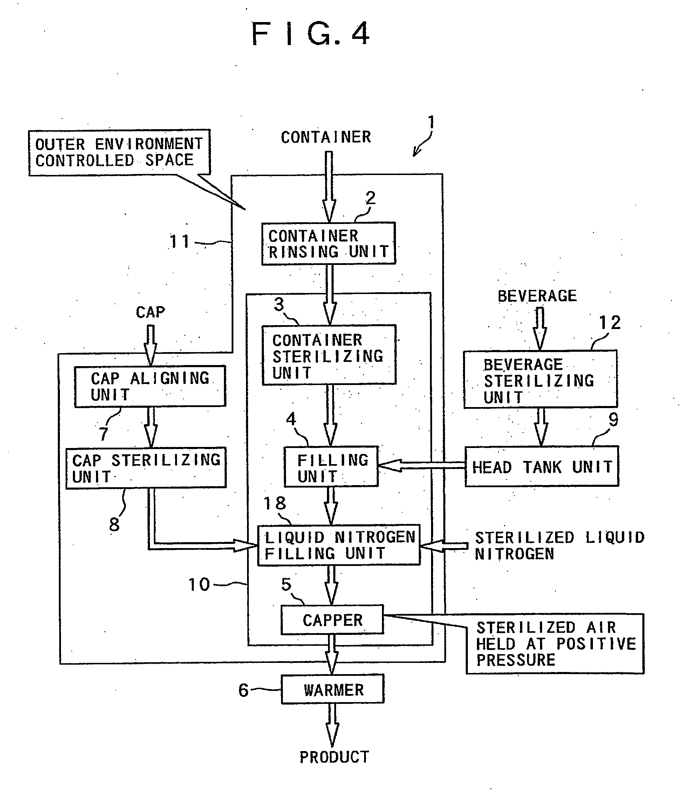

The apparatus shown in Fig. 4 is different from the apparatus of Fig. 1 in that the positive container-internal-pressure maintaining unit is the liquid nitrogen filling unit 18 and is the same as the apparatus of Fig. 1 in other structure and function.

The liquid nitrogen filling unit 18 is a unit in which sterilized liquid nitrogen is filled in a head space of a container after filling a beverage in the container and before sealing the container. For filling liquid nitrogen in the head space of the container, the liquid nitrogen may be flown, dripped, sprayed or otherwise filled in the container. From the standpoint of filling efficiency, dripping is preferable.

By sealing the container by the capper immediately after filling liquid nitrogen in the head space of the container in which the beverage has been filled, the head space is filled with evaporated liquid nitrogen and the internal pressure of the head space thereby is made positive. By this method, a proper internal pressure within a range from 102 kPa to 301 kPa can be provided.

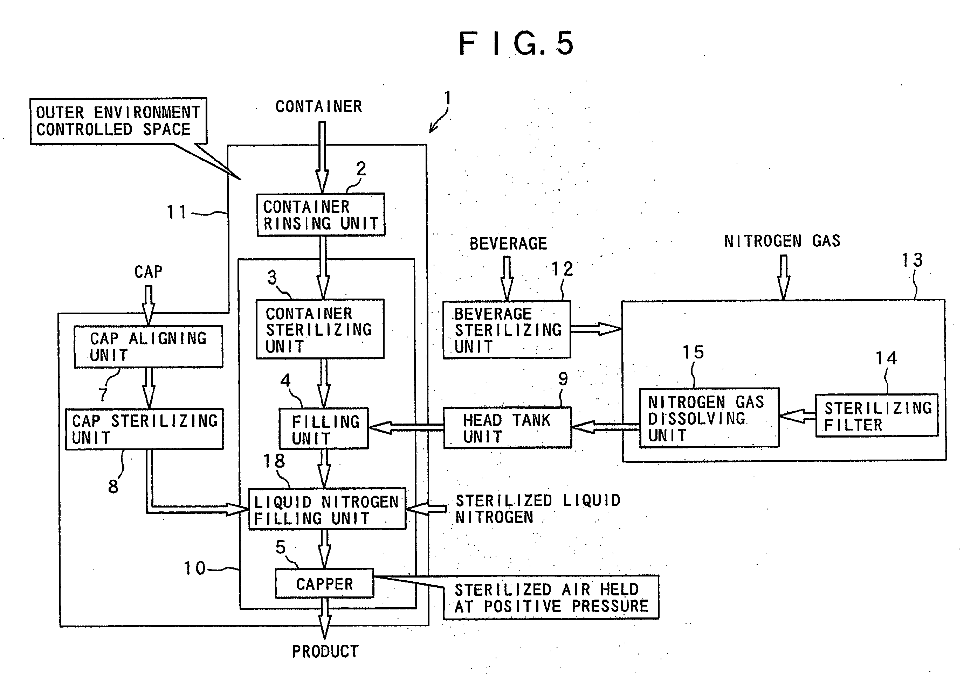

In the apparatus shown in Fig. 5, the liquid nitrogen filling unit 18 is added to the apparatus shown in Fig. 1 and, in other respect, the apparatus of Fig. 5 is the same as the apparatus of Fig. 1. In this apparatus, by cooperation of the nitrogen gas dissolving unit and the liquid nitrogen filling unit, an accurate internal pressure can be obtained with a small amount of nitrogen.

### Example 1

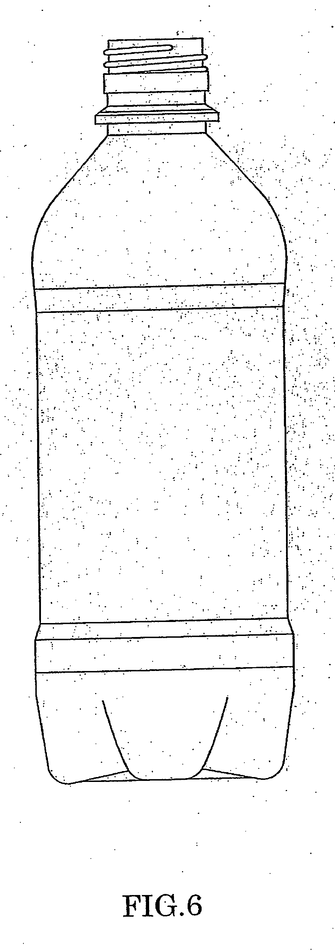

Water which had been sterilized by heating (preheated at 80°C and sterilized at 135°C and held for 30 seconds and cooled to 25°C in a UHT sterilizing unit) was subjected to a nitrogen gas absorption process by using a unit for absorbing nitrogen gas by a thin film flowing method in a tank filled with nitrogen gas which had been sterilized by filtering through a filter (material : PTFE 0.2 µm filter, sterilized by steam). The process was carried out under conditions of volume in the tank 71L, water temperature 25°C, pressure 0.5MPa and 0.3MPa, 2L/min. The inside of the absorption unit pipes for transferring liquid and gas were previously sterilized by heating. The water which was subjected to the pressure absorption process was filled by 510ml (with amount of the head space being 10ml) in a 500ml carbon dioxide type bottle shown in Fig. 6 (having average thickness of 0.2mm with full capacity of 520ml). The bottle was sealed by capping 30 minutes later and the internal pressure of the bottle was measured. Results are as follows:

**Table 1**

| | | | |
|---|---|---|---|
| Tank internal pressure (MPa) | | 0.5 | 0.3 |
| Filling temperature (°C) | | 25 | ← |
| Head space (ml) | | 10 | ← |
| Internal pressure (kPa) | ① | 224 | 157 |
| | ② | 224 | 154 |
| | ③ | 223 | 154 |
| | ④ | 227 | 155 |
| | ⑤ | 224 | 154 |
| | AVE. | 224 | 155 |

A microbial test was conducted on the product produced by the above described manufacturing method and apparatus. The product was preserved at 30 °C for two weeks and then microbial contamination state of the contents of the product was examined by a microbial test. In the test, the whole amount of the contents were filtered through a whole membrane filter and held on a standard agar medium at 30°C for one week and the number of colonies was measured by a membrane filter made of cellulose mixed ester and having an opening diameter of 0.45 µm. As a result, the number of detected colonies was 0, showing that sterilized state of the product was maintained.

### Example 2

Water which had been sterilized by heating (preheated at 80°C and sterilized at 135°C and held for 30 seconds and cooled to 20°C in a UHT sterilizing unit) was filled by 510ml (with amount of the head space being 10ml) in a 500ml carbon dioxide type PET bottle shown in Fig. 6 (having average thickness of 0.2mm with full capacity of 520ml). Then, liquid nitrogen which had been sterilized by filtering through a filter (a 0.2 µm filter made of PTFE which had been sterilized by steam and dried) was filled by the amount shown in Table 2 and immediately thereafter the bottle was sealed by a sterilized cap. The internal pressure of the bottle was measured. Results are shown in Table 2

**Table 2**

| Amount of liquid nitrogen filled (mg) | Internal pressure of bottle (kPa) |
|---|---|
| 5 | 141 |
| 10 | 181 |
| 25 | 301 |

A microbial test was conducted on the product produced by the above described manufacturing method and apparatus. The product was preserved at 30°C for two weeks and then microbial contamination state of the contents of the product was examined by a microbial test. In the test, the whole amount of the contents were filtered through a whole membrane filter and held on a standard agar medium at 30°C for one week and the number of colonies was measured by a membrane filter made of cellulose mixed ester and having an opening diameter of 0.45 µm. As a result, the number of detected colonies was 0, showing that sterilized state of the product was maintained.

### Example 3

Water which had been sterilized by heating (preheated at 80°C and sterilized at 135°C and held for 30 seconds and cooled to 25°C in a UHT sterilizing unit and then was subjected to bubbling in a sterilized tank by nitrogen gas which had been sterilized by filtering through a filter and maintained at 301 kPa) was filled by 510ml (with amount of the head space being 10ml) in a 500ml carbon dioxide type PET bottle shown in Fig. 6 (having average thickness of 0.2mm with full capacity of 520ml). Then, liquid nitrogen which had been sterilized by filtering through a filter (a 0.2 µm filter made of PTFE which had been sterilized by steam and dried) was filled by 20mg and immediately thereafter the bottle was sealed by a sterilized cap. The internal pressure of the bottle was measured and the average internal pressure of the bottle was 301 kPa.

A microbial test was conducted on the product produced by the above described manufacturing method and apparatus. The product was preserved at 30°C for two weeks and then microbial contamination state of the contents of the product was examined by a microbial test. In the test, the whole amount of the contents were filtered through a whole membrane filter and held on a standard agar medium at 30°C for one week and the number of colonies was measured by a membrane filter made of cellulose mixed ester and having an opening diameter of 0.45 µm. As a result, the number of detected colonies was 0, showing that sterilized state of the product was maintained.

### Example 4

Relation between the bottle internal pressure thus obtained and lateral compression strength of the bottle with respect to the above described 500ml circular type PET bottle having average thickness of 0.2mm is shown in Table 3.

In Table 3, the amount of displacement represents an amount (mm) of lateral collapse of the bottle when the bottle is compressed in lateral direction with the bottle lateral compression strength described in the line of the lateral compression strength. In case the bottle internal pressure is 154.2 kPa (i.e., amount of filled nitrogen is 12.3ml), lateral compression strength of 43.8N is required for collapsing the bottle by 3mm.

**Table 3**

| | |
|---|---|
| Lateral compression strength | (strength when the amount of displacement is 3mm) |
| Bottle internal pressure (kPa) | 101 (atmospheric pressure) 154.2 |
| Lateral compression strength (N) 43.8 | 31.4 |

From this result, it will be understood that, by making the internal pressure of the bottle positive by filling nitrogen gas, the strength of the bottle is improved and therefore bottle thickness necessary for obtaining a predetermined bottle strength can be made smaller than in the prior art bottles and, as a result, the bottle can be made lighter to that extent. Specifically, for selling a plastic bottle in an automatic vending machine, it was necessary in the past to set the bottle thickness at about 0.2mm. In contrast, according to the present invention, the bottle thickness can be reduced to about 0.15mm.

Other embodiments of the invention will now be described. These embodiments correspond to the aspects 13 - 20 described above.

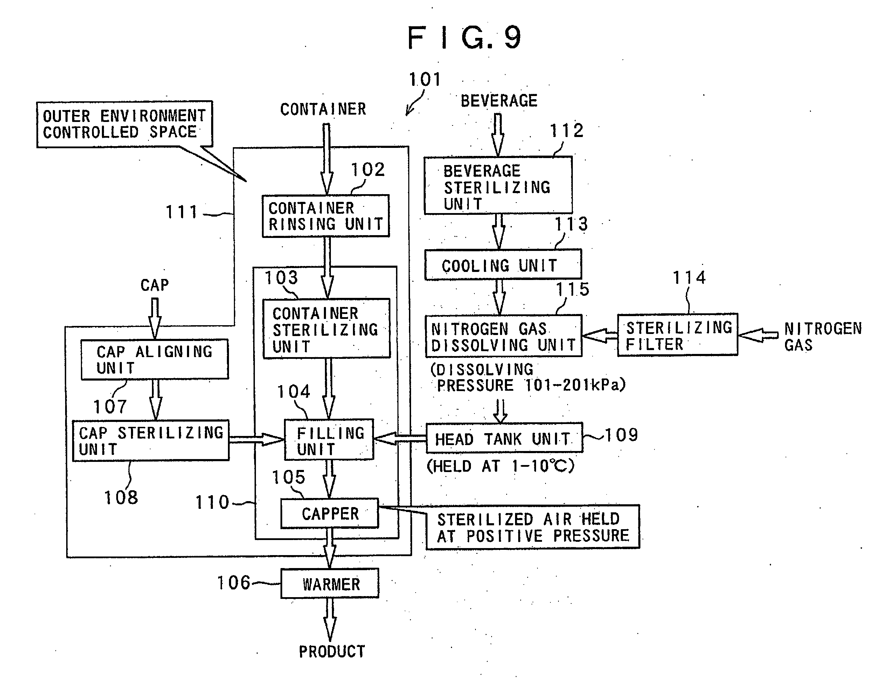

Figs. 9 - 12 are explanatory views schematically showing various embodiments of the apparatus for carrying the manufacturing method of the invention.

This method comprises a container sterilizing process for sterilizing at least an inner surface of a container; a beverage sterilizing process for sterilizing a beverage; a process for cooling the sterilized beverage to 1 - 10°C; a process for dissolving or superdissolving sterilized nitrogen gas in the cooled beverage at a pressure of 101 - 201 kPa; a process for filling the beverage in which the nitrogen gas is superdissolved in a container at a normal pressure (atmospheric pressure of 101 kPa); a sealing process for sealing the container filled with the beverage with a sterilized cap; and a warming process for warming the sealed container to 15 - 30°C , said container sterilizing process, filling process and sealing process being respectively performed in an aseptic space.

An embodiment of the apparatus for carrying out this method is shown in Fig. 9. This apparatus 101 comprises, in the order of conveying direction of the container, a container rinsing unit 102, a container sterilizing unit 103, a filling unit 104, a capper 105, and a warmer 106. The filling unit 104 is connected to a cap sterilizing unit 108 and a head tank unit 109 for storing a beverage. The container rinsing unit 102, a cap aligning unit 107 and the cap sterilizing unit 108 are disposed in an outer environment controlled space 111. The outer environment controlled space means an outer environment formed by defining a working room or a part of a working room which is controlled in its aseptic state to a predetermined class or below this class.

A container carried from outside is first rinsed in its inside and outside surfaces by the container rinsing unit 102 and then is transferred to the container sterilizing unit 103 where at least the inside surface of the container, preferably both inside and outside surface of the container, are sterilized. Sterilizing of the container can be achieved by spraying wart water or warmed sterilizer or applying steam on the surface of the container until the temperature of the surface to be sterilized of the container reaches 60°C or over, preferably 65°C or over.

After finishing sterilization, the container is transferred to the filling unit 104 where the beverage contained in the head tank unit 109 is filled in the container. In the head tank unit 109, the beverage which has been cooled to a predetermined temperature with a range from 1°C to 10°C is stored.

The head tank unit 109 is connected through the nitrogen gas dissolving unit 115 to a beverage sterilizing unit 112. The beverage is heated to a predetermined sterilizing temperature by the beverage sterilizing unit 112 and then is cooled by a cooling unit 113 to a predetermined temperature within a range from 1°C to 10°C, preferably within a range from 1°C to 5°C and supplied to a nitrogen gas dissolving unit 115. To the nitrogen gas dissolving unit 115 is supplied sterilized nitrogen gas through a sterilizing filter 114 and is dissolved or superdissolved into the sterilized beverage under pressure of 101 - 201 kPa. In other words, by causing nitrogen gas to contact the beverage at a temperature below room temperature and at a normal pressure (atmospheric pressure), the nitrogen gas is dissolved or forcibly dissolved into the beverage. This dissolving method is known by, e.g., Japanese Patent Publication No. 58-55079, and, as the nitrogen gas dissolving unit 115, a known carbonator, a micro bubble device in which nitrogen gas is turned to micro bubbles in a pipe and then is filled in the beverage and a static mixer in which an orifice or a venture pipe is provided to mix and stir filled nitrogen gas in the beverage can be used. As the pressure of the nitrogen gas, a pressure within a range from 131 kPa to 171 kPa is preferable and a pressure of 151 kPa (pressurizing of +50 kPa) is more preferable.

The beverage in which the nitrogen gas is dissolved or superdissolved in the nitrogen gas dissolving unit 115 is supplied from the head tank unit 109 to the filling unit 104 at a supply pressure of 101 - 201 kPa in which the beverage is filled in the container transferred from the container sterilizing unit 103. The filling temperature is a predetermined temperature within a range from 1°C to 10°C. In this case, although there is a certain interval between the tip of the filling nozzle and the opening of the container, since the supply pressure is a slightly positive pressure of 101 - 201 kPa relative to the atmospheric pressure, the beverage is filled in the container in a relatively stable state with little foaming or scattering. On the other hand, a cap supplied from an unillustrated cap supply source is supplied through the cap aligning unit 107 to the cap sterilizing unit 108 and sterilized by this unit by a known manner. The cap is then supplied to the filling unit 4 and fitted on the mouth of the container which has just been filled with the beverage.

The container fitted with the cap is transferred immediately to the capper which constitutes a sealing unit and the container is sealed with a cap. In the meanwhile, since the head space is at a normal pressure, nitrogen gas dissolved in the beverage is evaporated and thereby makes the internal pressure of the head space further positive.

The sealed container is transferred to the warmer 106 where the container is warmed to a predetermined temperature within a range from 15 °C to 30 °C and shipped as a product. By this warming, evaporation of the nitrogen gas which has been dissolved in the beverage is enhanced to make the internal pressure of the head space more positive.

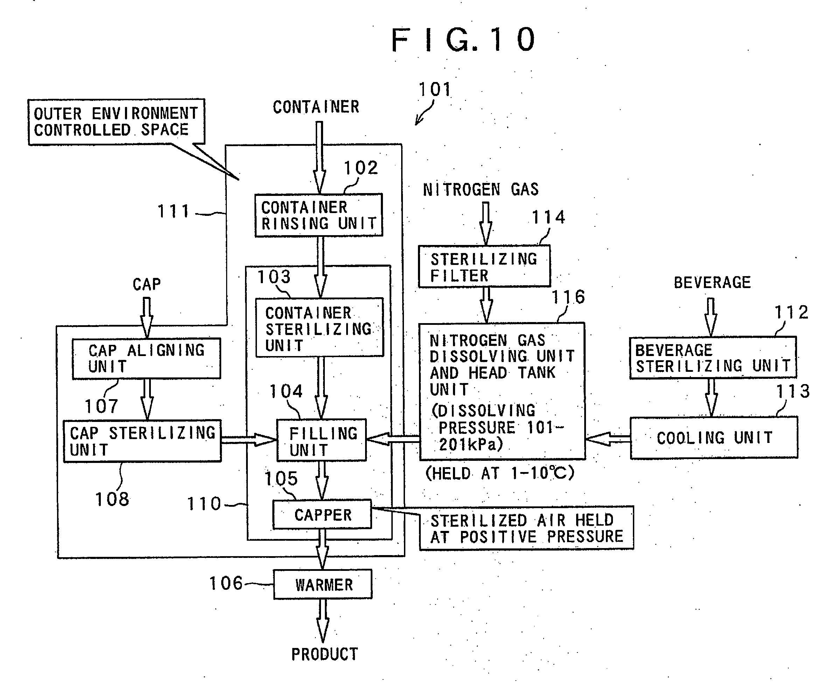

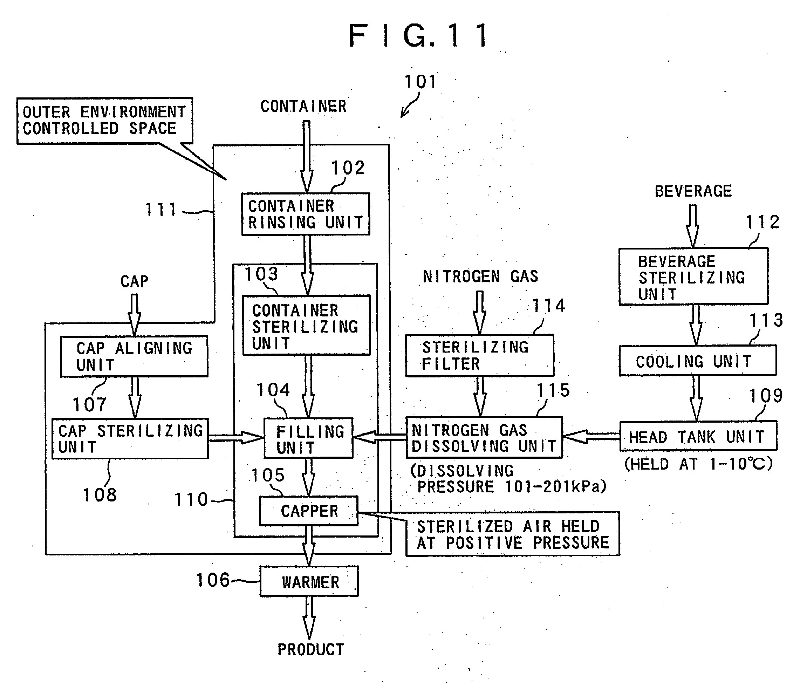

Figs. 10 and 11 are explanatory views showing modified examples of the apparatus of the embodiment shown in Fig. 9. In Figs. 10 and 11, the same component parts as those of Fig. 9 are designated by the same reference characters and detailed description thereof will be omitted.

The apparatus shown in Fig. 10 is different from the apparatus shown in Fig. 9 in that a nitrogen gas dissolving unit 116 serves also as a head tank unit and in other respects the structure and function of the apparatus are the same as those of the apparatus shown in Fig. 9.

The apparatus shown in Fig. 11 is different from the apparatus shown in Fig. 9 in that a head tank unit 109 is disposed before a nitrogen gas dissolving unit 115 and in other respects the structure and function of the apparatus are the same as those of the apparatus shown in Fig. 9.

In one aspect of the invention, the method of the invention comprises a container sterilizing process for sterilizing at least an inner surface of a container; a beverage sterilizing process for sterilizing a beverage; a process for cooling the sterilized beverage to 1 - 10°C; a process for dissolving or superdissolving sterilized nitrogen gas in the cooled beverage at a pressure exceeding a desired pressure; a process for reducing the beverage in which the nitrogen gas is superdissolved to a desired pressure of 101 - 201 kPa and storing the beverage; a process for filling the stored beverage in a container at a supply pressure of 101 - 201 kPa; a sealing process for sealing the container filled with the beverage with a sterilized cap; and a warming process for warming the sealed container to 15 - 30°C, said container sterilizing process, filling process and sealing process being respectively performed in an aseptic space.

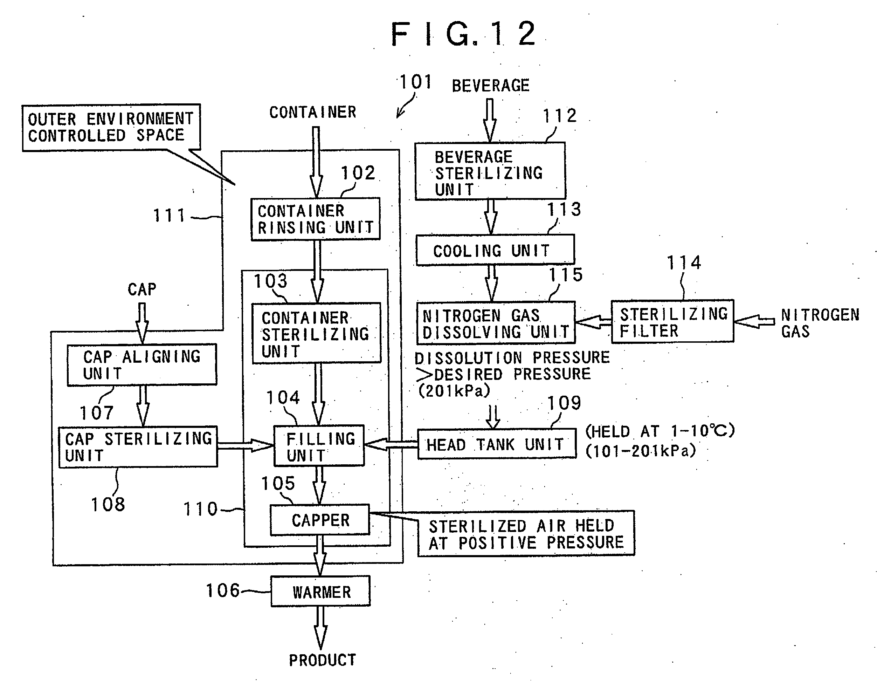

Fig. 12 is an explanatory view showing an embodiment of the apparatus for carrying out this method.

In the apparatus of Fig. 12, the structure of the component parts is the same as that of the embodiment of Fig. 9 but the embodiment of Fig. 12 is different from that of Fig. 9 in that, in the embodiment of Fig. 9, the nitrogen gas is filled in the beverage at a pressure of 101 - 201 kPa in the nitrogen gas dissolving unit 115 and the pressure in the head tank unit 109 is also maintained at a pressure of 101 - 201 kPa whereas, in the embodiment of Fig. 12, the nitrogen gas is filled in the beverage at a pressure exceeding a desired pressure, i.e., a pressure exceeding the atmospheric pressure while the pressure in the head tank unit 109 is maintained at a pressure of 101 kPa - 201 kPa. In the embodiment of Fig. 12, since the inside of the head tank unit 109 is maintained at a desired pressure within 101 - 201 kPa, the beverage transferred from the nitrogen gas dissolving unit 115 to the head tank unit 109 is reduced in its pressure to 101 - 201 kPa and is supplied at this pressure to the filling unit 104.

According to the invention, the above described advantages can be obtained and, in addition, there is the advantage that a filling nozzle which is used in the conventional aseptic filling equipment can be used and, therefore, there is no need for significantly changing the existing equipment.

### Example

Sterilized nitrogen gas was superdissolved in green tea of 10°C at 301 kPa and then the pressure was reduced and adjusted to 131 kPa and the drink was stored in a storage tank. This green tea was filled in a PET bottle having a full capacity of 530 ml and a head space of 30 ml. Slight foaming occurred from the green tea but the green tea did not blow out of the bottle. After sealing, the bottle was warmed to 25°C and the internal pressure of the bottle was measured. The internal pressure was 125 kPa (i.e., positive pressure of + 24 kPa assuming that the atmospheric pressure is 101 kPa). Although this bottle was cooled to 5°C, the bottle was not contracted and it was confirmed that the internal pressure was positive. The bottle was kept at 35°C for two weeks and it was confirmed that no bacteria existed or no change occurred in the beverage but a good condition was maintained.

Embodiments of the sterilized liquid nitrogen filling method and apparatus of the invention will now be described. These embodiments correspond to aspects 21 - 45 of the invention.

The sterilized filling system of food contained in a container to which the sterilized liquid nitrogen filling method is applied comprises a container sterilizing unit (rinser) for sterilizing inner and outer surfaces, at least an inner surface, of a container such as a plastic bottle, a food filling unit (filler) for filling food in the sterilized container, and a sealing unit (capper) for sealing the container filled with food with a cap. The rinser, filler and capper are disposed in an aseptic environment.

For maintaining a sterilized state in the inside of the aseptic environment, this aseptic filling system comprises a unit for periodically rinsing and sterilizing the respective units such as the rinser, filler and capper and the inner wall surface of a cover which forms the aseptic environment. A sterilizer, steam or hot water etc. is used for this rinsing and sterilizing.

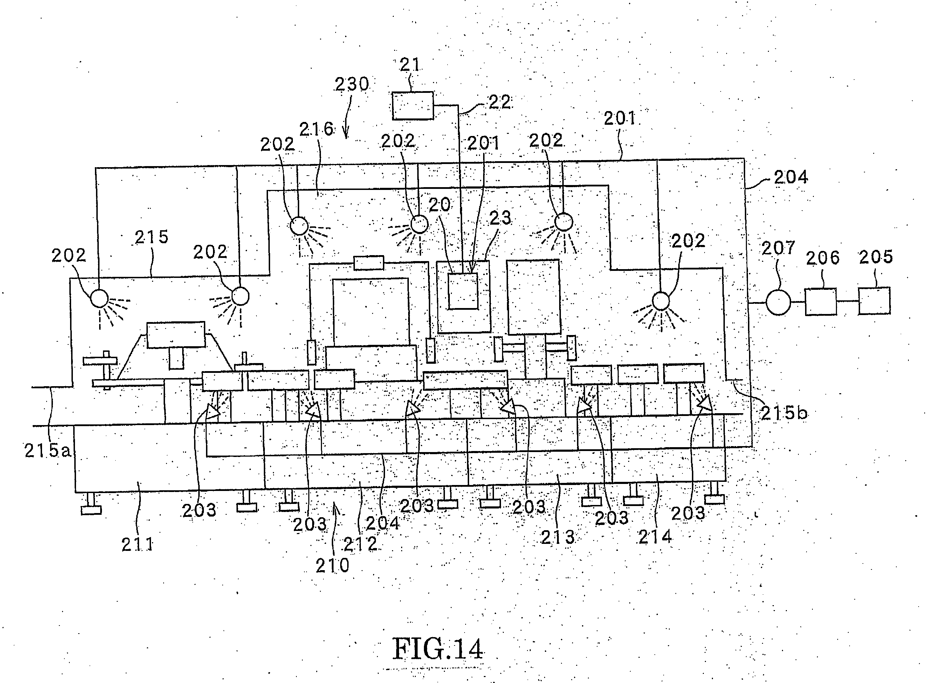

Fig. 14 is a view schematically showing, as an example of an apparatus for carrying out the sterilized liquid nitrogen filling method, an apparatus for filling a beverage in a PET bottle in an aseptic environment.

In Fig. 14, an aseptic beverage filling unit 210 is a filling unit for filling a beverage in a PET bottle and, in the order of conveying direction of the bottle, there are provided a bottle rinser 211 for sterilizing inner and outer surfaces, at least an inner surface, of the bottle, a filler 211, a capper 213 and a sorting unit 215 for sorting out bottles in two lines. The beverage filling apparatus 210 is covered by a cover 215 made of a steel plate and a box 216 forming the aseptic environment is formed by this cover 215.

The cover 215 is formed with a bottle inlet 215a and a bottle outlet 215b but the box 216 is substantially closed. The inside of the aseptic environment is filled with a sterilized air of a positive pressure and a sterilized state thereby is maintained.

An aseptic environment sterilizing unit 230 comprises a plurality of rotary nozzles 202 and a plurality of stationary nozzles 203 which constitute means for spraying hot water in the box 216. The rotary nozzles 202 consist of spray balls which are disposed in the upper portion of the box 215 with their injection openings being directed downwardly. The stationary nozzles 203 consist of full corn nozzles which are disposed in the lower portion of the box 216 in the vicinity of the floor with their injection openings being directed obliquely upwardly. The rotary nozzles 202 and the stationary nozzles 203 are connected to a hot water supply source 205 by a pipe 204 through a valve 207 and a warming heater 206 and can receive hot water from the hot water supply source 205.

In case sterilizing is made by using this apparatus, the valve 207 is operated to connect the pipe 204 to the hot water supply source 205. Water from the hot water supply source 205 is heated by the warming heater 206 and is supplied to the rotary nozzles 202 and stationary nozzles 203 through the pipe 204 and then is sprayed from these nozzles in the inside of the box. The hot water thus sprayed falls onto the most part of the surface to be sterilized including the outer surface of the bottle rinser 211, filler 212, capper 213 and sorting unit 214 in the box 216, the inner wall surface of the box 216 and a line (not shown) for supplying the hot water to the bottle rinser 211 and wet these surfaces to be sterilized. By wetting the most of the surface to be sterilized, the sprayed hot water sterilizes this part and evaporated steam is filled in the box 216 and thereby contacts the entire surface to be sterilized including a portion which is not wetted by the hot water whereby further sterilizing is performed. By continuing spraying of the hot water for a predetermined period of time, complete sterilizing of the entire surface to be sterilized is achieved. In this case, the inner wall surface of the box 216 which is the inner wall surface of the environment controlled space can be sufficiently sterilized in the same manner as the surface of the units.

Heating of the hot water is adjusted so that the sterilizing temperature will become 65°C or over and not higher than 100°C, more preferably below 96°C for performing sterilizing under the atmospheric pressure.

In the embodiment of Fig. 14, hot water is used for sterilizing the respective units of the apparatus. Alternatively, steam, sterilizer or sterilized water may be used for sterilizing.

The sterilized liquid nitrogen filling unit 201 for filling sterilized liquid nitrogen in the head space of the bottle after filling the beverage and before sealing the bottle is provided in the aseptic environment space between the filler 212 and the capper 213. A part of the component parts of the sterilized liquid nitrogen filling unit 201 including a sterilized liquid nitrogen storage tank 20 is covered with a protecting cover 23.

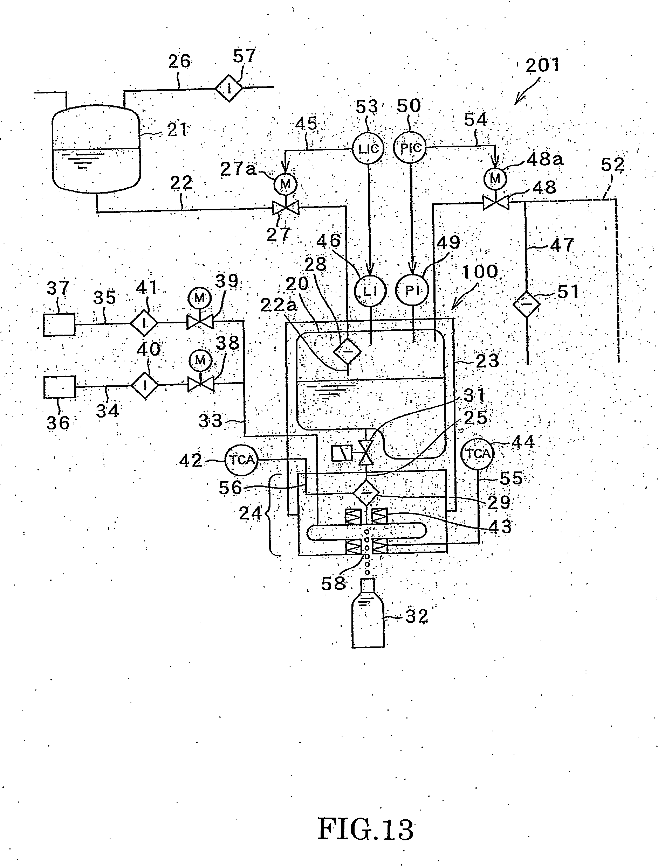

Fig. 13 is a view schematically showing the sterilized liquid nitrogen filling unit 201.

The sterilized liquid nitrogen filling unit 201 comprises the liquid nitrogen storage tank 20 disposed in the aseptic environment formed by the box 216 (Fig. 14) of the aseptic filling system and a liquid nitrogen flow path 25 leading from the storage tank 20 to a filling nozzle 24. The liquid nitrogen storage tank 20, the liquid nitrogen flow path 25 and the filling nozzle 24 are covered by a protecting cover 23 in the form of a box or a cylinder which is made of a water-proof and sterilizer-proof material and is shielded from the sterilizer or rinsing water sprayed for rinsing and sterilizing the inside of the aseptic environment. In the illustrated example, the filling nozzle 24 itself projects downwardly from the lower surface of the protecting cover 23. The sterilized liquid nitrogen storage tank 20 is connected through a liquid nitrogen flow path 22 to a liquid nitrogen supply source 21 provided outside of the aseptic environment. A switching valve 27 is provided in the liquid nitrogen flow path 22. The liquid nitrogen supply source 21 is supplied with liquid nitrogen from outside through a liquid nitrogen supply pipe 26 provided further upstream. A strainer 57 is provided in the liquid nitrogen supply pipe 26 for removing a relatively large piece of dust other than bacteria.

The downstream end of the liquid nitrogen flow path 22 is disposed above the surface of the liquid nitrogen in the liquid nitrogen storage tank 20 to form a liquid nitrogen supply opening 22a. By switching on the switching valve 27, liquid nitrogen flows down from the liquid nitrogen supply opening 22a to the liquid nitrogen storage tank 20.

A control wire unit 45 is connected to the switching valve 27 for controlling the liquid supply system while monitoring the liquid level of the liquid nitrogen storage tank 20. In the control wire unit 45, there are provided a liquid level monitor 46 for monitoring the liquid level of the storage tank 20 and a liquid level control unit 53. When the liquid level is lowered below a predetermined level, the control unit 53 is operated by a signal from the liquid level monitor 46 to operate an operating section 27a of the switching valve 27 to open the switching valve 27 and thereby start supply of the liquid nitrogen to the storage tank 20. When the liquid level reaches a predetermined level by supply of liquid nitrogen, the control unit 53 is operated by a signal from the liquid level monitor 46 to operate the operating section 27a of the switching valve 27 to close the switching valve 27 and thereby stop supply of the liquid nitrogen.

The sterilized liquid nitrogen filling unit 201 further comprises a supply nitrogen sterilizing filter 28 provided in the liquid nitrogen flow path 22 from the liquid nitrogen supply source 21 to the liquid nitrogen supply opening 22a in the storage tank 20 and a nozzle sterilizing filter 29 provided in a liquid nitrogen flow path 25 leading from the liquid nitrogen storage tank 20 to the filling nozzle 24 or in the filling nozzle 24 in the space within the protecting cover 23. In the illustrated example, the sterilizing filter 29 is provided in the filling nozzle 24.

The supply nitrogen sterilizing filter 28 should preferably be provided in the liquid nitrogen flow path 22 in the vicinity of the liquid nitrogen supply opening 22a for minimizing the possibility that the liquid nitrogen storage tank 20 is contaminated by bacteria contained in liquid nitrogen. The location of the sterilizing filter 28 however is not limited to this but the sterilizing filter 28 may be provided in the liquid nitrogen flow path 22 outside of the protecting cover 23, e.g., between the switching valve 27 and the liquid nitrogen supply source 21. In providing the supply nitrogen sterilizing filter 28 in the tank, if the supply nitrogen sterilizing filter 28 is fitted or screwed in the tank from the root of the flow path 22 and the portion of the cover 23 about the flow path 22 is constructed in such a manner that the portion can be opened and closed by providing an open-close hatch or the like means, it will be more preferable because the supply nitrogen sterilizing filter 28 can be removed from the tank 20 and cleaned in the outside of the cover 23.

In the liquid nitrogen flow path 25 downstream of the liquid nitrogen storage tank 20, a switching valve 31 is provided upstream of the filling nozzle 24 and, by switching on this switching valve 31, liquid nitrogen can be continuously or intermittently dripped in the head space of bottles 32 which sequentially pass under the filling nozzle 24.

In the liquid nitrogen flow path 25 between the sterilizing filter 29 and the filling nozzle 24 or in the filling nozzle 24, the tip end of a liquid nitrogen flow path sterilizing pipe 33 which constitutes sterilizing means for sterilizing at least one of the liquid nitrogen flow path 25 or the filling nozzle 24 is opened. In the illustrated example, the pipe 33 is opened in the filling nozzle 24. The liquid nitrogen flow path sterilizing pipe 33 is branched in its upstream portion to a flow-path sterilizing fluid supply pipe 34 and a flow-path drying gas supply pipe 35. The flow-path sterilizing fluid supply pipe 34 is connected to a supply source 36 of hot water, steam, sterilizer or sterilized water and the flow-path drying gas supply pipe 35 is connected to a flow-path drying gas supply source 37 of heated nitrogen gas or the like. A switching valve 38 is provided in the flow-path sterilizing fluid supply pipe 34 and a switching valve 39 is provided in the flow-path drying gas supply pipe 35. A sterilizing filter 40 is provided upstream of the switching valve 38 and a sterilizing filer 41 is provided upstream of the switching valve 39.

As the sterilizing filters 28, 29, 40, 41 and a sterilizing filter 51 to be described later, a known filter such as the filter disclosed in the above described Japanese Patent Application Laid-open Publication No. 2000-185710 may be used. By providing a filter having filtering capacity of 0.05 - 0.5 µm, preferably 0.1 - 0.2 µ m, the filter can have a function of removing spores of bacteria and a filter of a material having durability to extremely low temperature can be used. As the nozzle sterilizing filter, a hydrophobic filter having such a high liquid repellent property that liquid can be removed easily when the filter is rinsed with the liquid can be preferably used.

Operation of this sterilized liquid nitrogen filling unit 201 will now be described.

For storing sterilized liquid nitrogen in the liquid nitrogen storage tank 20, the switching valve 31 is switched off and the switching valve 27 is switched on to cause sterilized liquid nitrogen obtained by filtering liquid nitrogen supplied from the liquid nitrogen supply source 21 by the sterilizing filter 28 to flow down to the liquid nitrogen storage tank 20 until the liquid nitrogen reaches a predetermined level and thereafter the switching valve 27 is switched off.

For filling sterilized liquid nitrogen in the bottle 32, the switching valve 31 is switched on and off to continuously or intermittently drip the sterilized liquid nitrogen filtered by the sterilizing filter 29 from a liquid nitrogen dripping opening 58 of the filling nozzle 24 into the head space of the bottle 32.

For sterilizing the liquid nitrogen flow path 25 including the sterilizing filter 29 and/or the filling nozzle 24, the liquid nitrogen flow path 25 and/or the filling nozzle 24 are sterilized by supplying liquid nitrogen sterilizing fluid to the liquid nitrogen flow path 25 and/or the filling nozzle 24 for a predetermined period of time by switching off the switching valve 39 of the flow-path drying gas supply pipe 35 and switching on the switching valve 38 of the flow-path sterilizing fluid supply pipe 34 when liquid nitrogen is not supplied to the bottle. Then, the switching valve 38 is switched off and the switching valve 39 is switched on to supply drying gas o the liquid nitrogen flow path 25 and/or the filling nozzle 24 and thereby dry the liquid nitrogen flow path 25.

A heater 43 in the form of a coil heater is provided around the liquid nitrogen flow path 25 for heating the liquid nitrogen flow path 25 and/or the filling nozzle 24. The heater 43 performs two functions, i.e., a function of achieving drying faster and more accurately by playing a role of a heating support in drying portions of the liquid nitrogen flow path 25 wetted by hot water or steam when the liquid nitrogen flow path 25 or the filling nozzle is sterilized with hot water or steam, and a function of a heater for warming a portion of the apparatus in the vicinity of the liquid nitrogen flow path for preventing the portion in the vicinity of the liquid nitrogen flow path 25 or the filling nozzle 24 during operation from being affected by frost due to cooling with nitrogen.

A control wire 55 of a temperature control unit 44 is connected to the heater 43 so as to control the temperature of the heater 43 to a predetermined temperature. A control wire 56 of a temperature control unit 42 is connected to the sterilizing filter 29 to control the temperature of the sterilizing filter 29 to a predetermined temperature. In case the liquid nitrogen flow path 25 and/or the filling nozzle 24 is sterilized with hot water or steam, sterilizing is conducted at a temperature of, e.g., 120°C and it is examined whether the temperature of the sterilizing filter 29 has reached this temperature and the temperature is adjusted to this temperature.

In another embodiment of the invention, the liquid nitrogen flow path 25 and/or the filling nozzle 24 may be sterilized by heating by raising the temperature of the heater 43 without providing the liquid nitrogen flow path sterilizing pipe 33.

In another embodiment of the invention, a part or whole of the liquid nitrogen flow path 25 or the filling nozzle 24 may be detachably mounted on the apparatus by such means as fitting or screwing and periodically dismounted from the apparatus for sterilizing in the outside of the aseptic environment.

The tip end of an exhaust pipe 47 for exhausting nitrogen gas evaporating from liquid nitrogen stored in the liquid nitrogen storage tank 20 opens in the storage tank 20. A switching valve 48 is provided in the exhaust pipe 47 and a sterilizing filter 51 is provided on the downstream side of the exhaust pipe 47.

A control wire unit 54 is connected to the switching valve 48 for monitoring pressure in the liquid nitrogen storage tank 20 and thereby controlling the exhaust system. A pressure monitor 49 for monitoring pressure in the storage tank 20 and a pressure control unit 50 are provided in the control wire unit 54. When the pressure in the storage tank 20 has exceeded a predetermined level, the control unit 50 is operated by a signal from the pressure monitor 49 to operate an operation section 48a of the switching valve 48 to switch on the switching valve 48 and thereby start exhausting of evaporated nitrogen gas from the storage tank 20. By this operation, nitrogen gas which is filtered and sterilized by the sterilizing filter 51 is exhausted in the aseptic environment. When the pressure has lowered below a predetermined level, the control unit 50 is operated by a signal from the pressure monitor 49 to operate the operation section 48a of the switching valve 48 to switch off the switching valve 48 and thereby stop exhausting of nitrogen gas.

In another embodiment of the invention, an exhaust pipe 52 shown by a dotted line in the figure may be provided downstream of the switching valve 48 so as to reach the outside of the aseptic environment so that evaporating gas may be exhausted in the outside of the aseptic environment.

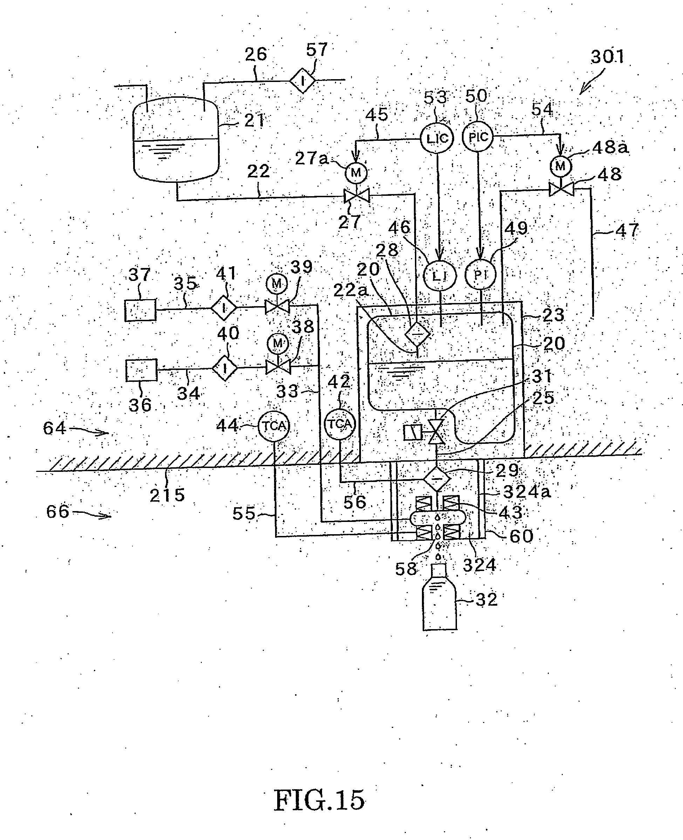

Referring to Figs. 15, 16 and 17, other embodiments of the sterilized liquid nitrogen filling apparatus will be described. These embodiments correspond to aspects 46 - 55 of the invention.

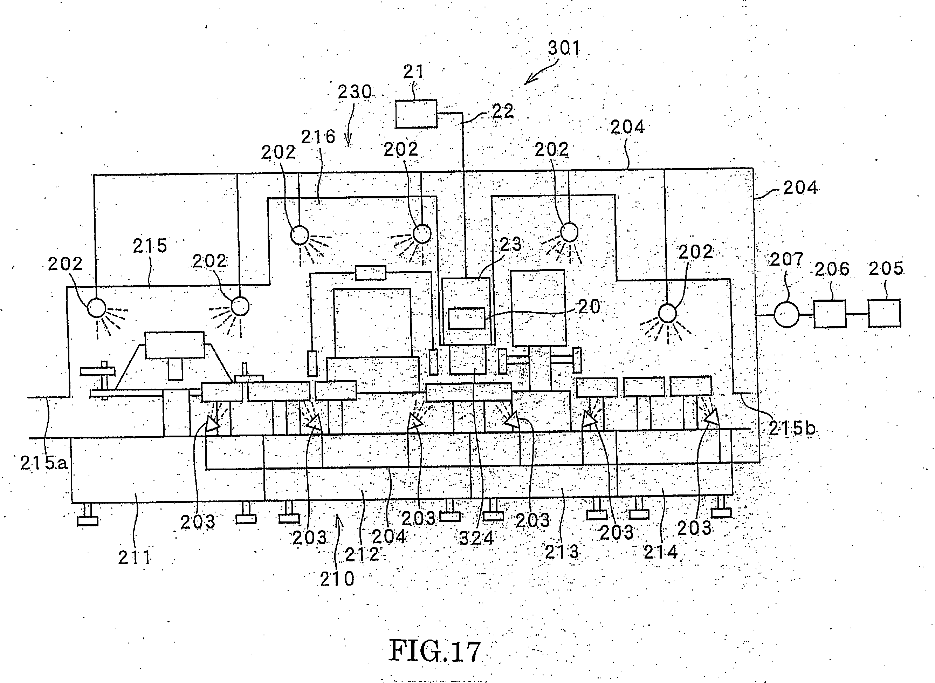

Fig. 17 is a view schematically showing an apparatus for filling a beverage in a PET bottle in an aseptic environment as an example of the apparatus for carrying out the sterilized liquid nitrogen filling method of the invention. In Fig. 17, the same component parts as those in Fig. 14 are designated by the same reference characters and description thereof will be omitted. In Fig. 17, a sterilized liquid storage tank 20 of a sterilized liquid nitrogen filling apparatus 301 is provided outside of an aseptic environment and a filling nozzle 324 is provided in the aseptic environment.

Fig. 15 is a view schematically showing the sterilized liquid nitrogen filling apparatus 301. In Fig. 15, the same component parts as those in Fig. 13 are designated by the same reference characters and description thereof will be omitted.

An aseptic environment 66 is formed by a cover 215 (see Fig. 17) of the sterilized filling system in the inside thereof. The sterilized liquid nitrogen filling apparatus 301 comprises the liquid nitrogen storage tank 20, a liquid nitrogen flow path 25 leading from the storage tank 20 to a filling nozzle 324 and the filling nozzle 324. The liquid nitrogen storage tank 20 and the liquid nitrogen flow path 25 are provided in a space 64 outside of the aseptic environment which is outside of the cover 215 and the filling nozzle 324 is provided in a filling nozzle housing cylinder 60 fixed to the cover 215 in an aseptic environment 66. The liquid nitrogen storage tank 20 is covered with a protecting cover 23 in the form of a box. This cover 23 may not necessarily be provided but it is preferable to provide it for preventing the storage tank from being affected by dew or frost by cooling due to liquid nitrogen. The filling nozzle 324 is enclosed by a cylindrical outer wall 324a made of a water-proof and sterilizer-proof material and is shielded by this outer wall 324 from a sterilizer and rinsing water sprayed for rinsing and sterilizing the inside of the aseptic environment. The top surface of the outer wall 324a is fixed by, e.g., welding, to the lower surface of the protecting cover 23 of the liquid nitrogen storage tank 20. The sterilized liquid nitrogen storage tank 20 is connected through a liquid nitrogen flow path 22 to a liquid nitrogen supply source 21 provided in the space 64 outside of the aseptic environment. A switching valve 27 is provided in the liquid nitrogen flow path 22. The liquid nitrogen supply source 21 receives liquid nitrogen from outside through a liquid nitrogen supply pipe 26 provided further upstream. A dust removing strainer 57 is provided in the liquid nitrogen supply pipe 26 for removing a relative large piece of dust other than bacteria.

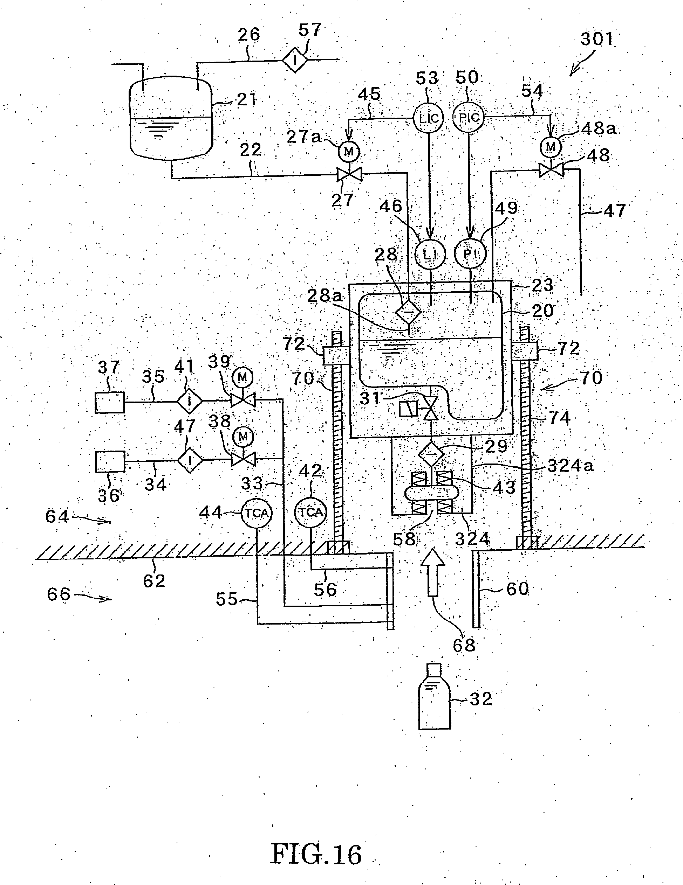

Fig. 16 is a view schematically showing another embodiment of the invention. In the embodiment of Fig. 16, the same component parts as those of Fig. 15 are designated by the same reference characters and description thereof will be omitted.

The apparatus 301 of this embodiment comprises an elevating and lowering mechanism 70 consisting of feed screws 74 provided vertically on both sides of a protecting cover 23 and feeding blocks 72 having screw holes in which the feed screws 74 are screwed and being fixed to both sides of the protecting cover 23. The feed screws 74 can be rotated by an unillustrated drive mechanism.

By rotating the feed screws 74 by this elevating and lowering mechanism and thereby elevating the protecting cover 23 in the direction of arrow 68 in the figure, the filling nozzle 324 fixed to the protecting cover 23 is also elevated. Therefore, for maintenance such as replacement of the heater provided about the nozzle for sterilizing the nozzle and the sterilizing filter, the filling nozzle can be moved easily to the space 64 outside of the aseptic environment. After completion of the maintenance, the filling nozzle 324 is lowered by rotating the feed screws 74 reversely and therefore the filling nozzle 324 can be restored to a predetermined position in the filling nozzle housing cylinder 60 in the aseptic environment 62.

The elevating and lowering mechanism is not limited to the above described mechanism consisting of the feed screws 74 and the feed blocks 72 but other elevating and lowering mechanism using, e.g., a cam and link mechanism may be used.

### Industrial Applicability

The present invention can be utilized as a method and an apparatus for manufacturing a beverage contained in a container particularly a non-carbonated drink including, for example, a soft drink, mineral water, milk and a drink containing milk, circulating at room temperature and contained in a plastic bottle such as a PET bottle or a metal bottle or a metal can. The method and apparatus are capable of reducing weight of the container.

## Claims

1. A method for manufacturing a non-carbonated beverage circulating at room temperature contained in a container comprising:
a container sterilizing process for sterilizing at least an inner surface of a container;
a beverage sterilizing process for sterilizing a beverage;
a process for dissolving or superdissolving sterilized nitrogen gas in the sterilized beverage;
a process for filling the sterilized beverage in which the nitrogen gas is dissolved or superdissolved in the container; and
a sealing process for sealing the container filled with the beverage with a sterilized cap;
said container sterilizing process, filling process and sealing process being respectively performed in an aseptic space (10) and, in said filling process, a filling nozzle (24, 324) is separated from a filling opening of the container,
**characterized in that**
said process of dissolving or superdissolving sterilized nitrogen gas comprises a process for cooling the sterilized beverage to a temperature within a range from 1°C to 10°C and a process for dissolving or superdissolving the sterilized nitrogen gas in the cooled beverage at a pressure within a range from 101 kPa to 201 kPa.

2. The method of claim 1, wherein the sterilized nitrogen gas is superdissolved in the cooled beverage at a pressure exceeding a desired pressure and the pressure of the beverage in which the nitrogen gas is superdissolved is reduced to a desired pressure within said range from 101 kPa to 201 kPa for storing the container.

3. A method as defined in claim 1 or 2 wherein a process for warming the sealed container to a temperature within a range from 15°C to 30°C is provided after said sealing process.

4. An apparatus for manufacturing a non-carbonated beverage circulating at room temperature contained in a container comprising:
container sterilizing means for sterilizing at least an inner surface of a container;
beverage sterilizing means for sterilizing a beverage;
nitrogen gas dissolving means for dissolving or superdissolving sterilized nitrogen gas in the sterilized beverage;
filling means for filling the sterilized beverage in which the nitrogen gas is dissolved or superdissolved in the container; and
a capper for sealing the container filled with the beverage with a sterilized cap;
said container sterilizing means, filling means and capper being respectively disposed in an aseptic space (10) and, in said filling means, a filling nozzle (24, 324) is separated from a filling opening of the container,
**characterized in that**
said means for dissolving or superdissolving sterilized nitrogen gas comprises cooling means for cooling the sterilized beverage to a temperature within a range from 1°C to 10°C and nitrogen gas dissolving means for dissolving or superdissolving the sterilized nitrogen gas in the cooled beverage at a pressure within a range from 101 kPa to 201 kPa.

5. The apparatus of claim 4, wherein said nitrogen gas dissolving means superdissolves the sterilized nitrogen gas in the cooled beverage at a pressure exceeding a desired pressure and storing means for reducing the pressure of the beverage in which the nitrogen gas is superdissolved to a desired pressure within said range from 101 kPa to 201 kPa and storing the container are provided.

6. An apparatus as defined in claim 4 or 5, wherein means for warming the sealed container to a temperature within a range from 15°C to 30°C is provided after said sealing means.

## Patentansprüche

1. Verfahren zum Herstellen eines in einem Behälter enthaltenen kohlensäurefreien Getränks, das bei Raumtemperatur zirkuliert, wobei das Verfahren aufweist:
einen Behältersterilisierungsvorgang zum Sterilisieren mindestens einer Innenfläche eines Behälters;
einen Getränkesterilisierungsvorgang zum Sterilisieren eines Getränks;
einen Vorgang zum Auflösen oder Superauflösen eines sterilisierten Stickstoffgases in dem sterilisierten Getränk;
einen Vorgang zum Füllen des sterilisierten Getränks, in dem das Stickstoffgas aufgelöst oder superaufgelöst ist, in den Behälter; und
einen Siegelungsvorgang zum Versiegeln des mit dem Getränk be-füllten Behälters mittels einer sterilisierten Kappe;
wobei der Behälter-Sterilisierungsvorgang, -Füllvorgang und -Siegelungsvorgang jeweils in einem aseptischen Raum (10) durchgeführt werden und in dem Füllvorgang eine Fülldüse (24, 324) von einer Füllöffnung des Behälters getrennt ist,
**dadurch gekennzeichnet, dass**
der Vorgang zum Auflösen oder Superauflösen des sterilisierten Stickstoffgases einen Vorgang zum Kühlen des sterilisierten Getränks auf eine Temperatur im Bereich von 1°C bis 10°C und einen Vorgang zum Auflösen oder Superauflösen des sterilisierten Stickstoffgases in dem gekühlten Getränk bei einem Druck in einem Bereich von 101 kPA bis 201 kPa aufweist.

2. Verfahren nach Anspruch 1, bei dem das sterilisierte Stickstoffgas in dem gekühlten Getränk bei einem Druck superaufgelöst wird, der einen gewünschten Druck übersteigt, und der Druck in dem Getränk, in dem das Stickstoffgas superaufgelöst wird, auf einen gewünschten Druck in dem genannten Bereich von 101 kPA bis 201 kPa reduziert wird, um den Behälter zu lagern.

3. Verfahren nach Anspruch 1 oder 2, bei dem nach dem Siegelungsvorgang ein Vorgang zum Erwärmen des versiegelten Behälters auf eine Temperatur in einem Bereich von 15°C bis 30°C vorgesehen ist.

4. Vorrichtung zum Herstellen eines in einem Behälter enthaltenen kohlensäurefreien Getränks, das bei Raumtemperatur zirkuliert, wobei die Vorrichtung aufweist:
eine Behältersterilisierungsvorrichtung zum Sterilisieren mindestens einer Innenfläche eines Behälters;
eine Getränkesterilisierungsvorrichtung zum Sterilisieren eines Getränks;
eine Stickstoffgas-Auflösungsvorrichtung zum Auflösen oder Superauflösen eines sterilisierten Stickstoffgases in dem sterilisierten Getränk;
eine Füllvorrichtung zum Füllen des sterilisierten Getränks, in dem das Stickstoffgas aufgelöst oder superaufgelöst ist, in den Behälter; und
einen Verschließer zum Versiegeln des mit dem Getränk befüllten Behälters mittels einer sterilisierten Kappe;
wobei die Behälter-Sterilisierungsvorrichtung, -Füllvorrichtung und -Verschließervorrichtung jeweils in einem aseptischen Raum (10) angeordnet sind und in der Füllvorrichtung eine Fülldüse (24, 324) von einer Füllöffnung des Behälters getrennt ist,
**dadurch gekennzeichnet, dass**
die Vorrichtung zum Auflösen oder Superauflösen des sterilisierten Stickstoffgases eine Kühlvorrichtung zum Kühlen des sterilisierten Getränks auf eine Temperatur im Bereich von 1°C bis 10°C und eine Stickstoffgas-Auflösungsvorrichtung zum Auflösen oder Superauflösen des sterilisierten Stickstoffgases in dem gekühlten Getränk bei einem Druck in einem Bereich von 101 kPA bis 201 kPa aufweist.

5. Vorrichtung nach Anspruch 4, bei der die Stickstoffgas-Auflösungs-vorrichtung das sterilisierte Stickstoffgas in dem gekühlten Getränk bei einem Druck superauflöst, der einen gewünschten Druck übersteigt, und eine Lagerungsvorrichtung vorgesehen ist, um den Druck des Getränks, in dem das Stickstoffgas superaufgelöst wird, auf einen gewünschten Druck in dem genannten Bereich von 101 kPA bis 201 kPa zu reduzieren und den Behälter zu lagern.

6. Vorrichtung nach Anspruch 4 oder 5, bei der im Anschluss an die Siegelungsvorrichtung eine Vorrichtung vorgesehen ist, um den gesiegelten Behälter auf eine Temperatur in einem Bereich von 15°C bis 30°C zu erwärmen.

## Revendications

1. Procédé pour fabriquer une boisson non carbonatée qui circule à la température ambiante, contenue dans un récipient, comprenant :
une opération de stérilisation de récipient servant à stériliser au moins une surface interne d'un récipient ;
une opération de stérilisation de boisson servant à stériliser une boisson ;
une opération de dissolution ou de surdissolution d'azote gazeux stérilisé dans la boisson stérilisée ;
une opération de remplissage avec la boisson stérilisée dans laquelle l'azote gazeux est dissous ou en surdissolution ; et
une opération de fermeture, servant à fermer le récipient rempli de la boisson au moyen d'un couvercle stérilisé ;
lesdites opérations de stérilisation du récipient, de remplissage et de fermeture étant respectivement exécutées dans un espace aseptique (10), une buse de remplissage (24, 324) étant laissée espacée d'une ouverture de remplissage du récipient dans ladite opération de remplissage,
**caractérisé en ce que**
ladite opération de dissolution ou de surdissolution d'azote gazeux stérilisé comprend une opération servant à refroidir la boisson stérilisée à une température comprise dans l'intervalle de 1 °C à 10 °C, et une opération servant à dissoudre l'azote gazeux stérilisé ou à le mettre en surdissolution dans la boisson refroidie sous une pression comprise dans l'intervalle de 101 kPa à 201 kPa.

2. Procédé selon la revendication 1, dans lequel l'azote gazeux stérilisé est mis en surdissolution dans la boisson refroidie sous une pression qui excède une pression souhaitée, et la pression de la boisson dans laquelle l'azote gazeux est en surdissolution est abaissée à une pression souhaitée, comprise dans l'intervalle de 101 kPa à 201 KPa, pour le stockage du récipient.

3. Procédé selon la revendication 1 ou 2, dans lequel une opération servant à chauffer le récipient fermé à une température comprise dans un intervalle de 15 °C à 30 °C est exécutée après ladite opération de fermeture.

4. Appareil pour fabriquer une boisson non carbonatée qui circule à la température ambiante, contenue dans un récipient, comprenant :
des moyens de stérilisation de récipient servant à stériliser au moins une surface interne d'un récipient ;
des moyens de stérilisation de boisson servant à stériliser une boisson ;
des moyens de dissolution d'azote gazeux servant à dissoudre de l'azote gazeux stérilisé ou en mettre en surdissolution dans la boisson stérilisée;
des moyens de remplissage servant à remplir le récipient avec la boisson stérilisée dans laquelle l'azote gazeux est dissous ou en surdissolution ; et
un appareil de fermeture servant à fermer le récipient rempli de la boisson au moyen d'un couvercle stérilisé ;
lesdits moyens de stérilisation de récipient, les moyens de remplissage et l'appareil de pose de couvercle étant respectivement disposés dans un espace aseptique (10) et une buse de remplissage (24, 324) comprise dans lesdits moyens de remplissage étant laissée espacée d'une ouverture de remplissage du récipient,
**caractérisé en ce que** :
lesdits moyens servant à dissoudre de l'azote gazeux stérilisé ou à en mettre en surdissolution comprennent des moyens de refroidissement servant à refroidir la boisson stérilisée à une température comprise dans un intervalle de 1 °C à 10 °C et des moyens de dissolution de l'azote gazeux servant à dissoudre l'azote gazeux stérilisé ou à le mettre en surdissolution dans la boisson refroidie sous une pression comprise dans l'intervalle de 101 kPa à 201 kPa.

5. Appareil selon la revendication 4, dans lequel lesdits moyens de dissolution d'azote gazeux mettent l'azote gazeux stérilisé en surdissolution dans la boisson refroidie sous une pression excédant une pression souhaitée et il est prévu des moyens de stockage servant à réduire la pression de la boisson dans laquelle l'azote gazeux est en surdissolution à une pression souhaitée comprise dans l'intervalle de 101 kPa à 201 kPa et à stocker le récipient.

6. Appareil selon la revendication 4 ou 5, dans lequel des moyens servant à chauffer le récipient fermé à une température comprise dans l'intervalle de 15 °C à 30 °C sont prévus en aval desdits moyens de fermeture.
